# EUROPEAN PATENT APPLICATION

(11) **EP 4 492 317 A1**
(43) Date of publication of application: **15.01.2025**
(21) Application number: 24187943.6
(22) Date of filing: 11.07.2024
(51) Int. Cl.: G06Q 30/0283

(54) **SYSTEMS AND METHODS FOR DISTRIBUTION MANAGEMENT INCLUDING SPECIAL PRICING DETERMINATION**

(30) Priority: 11.07.2023 US 202363513073 P; 21.07.2023 US 202363515075 P; 10.07.2024 US 202418768971
(71) Applicant: Ingram Micro Inc., Irvine, CA 92612 (US)
(72) Inventor: SAHOO, Sanjib, Naperville, IL 60564 (US); ANNES, Jim, Irvine, CA 92612 (US)
(74) Representative: Zoebisch, Michael

(57) **Abstract**

System and methods are provided for automated SKU management. Embodiments include a user interface for receiving diverse catalog files, a Catalog Transformation module, a Real-Time Data Mesh (RTDM) module, a Master Data Governance (MDG) module, a Global Data Repository (GDR), and a Search Platform. The Catalog Transformation module, through iterative learning, transforms catalog files to a standard format and predicts categorization and attribute mapping. The RTDM module is configured to perform real-time data exchange. The MDG module validates the transformed catalogs. The GDR stores validated catalogs. Embodiments can include a Dynamic SKU Creation module and a Global Pricing Engine for real-time pricing. Embodiments improve data accuracy and SKU management, facilitating integrated order processing and fulfillment.

## Description

### CROSS-REFERENCE TO RELATED APPLICATIONS

This application claims the benefit of U.S. Provisional Patent Application No. 63/513,073, filed July 11, 2023 and U.S. Provisional Patent Application No. 63515,075, filed July 21, 2023. Each application is incorporated herein in its entirety.

### BACKGROUND

The disclosed embodiments relate to aspects of a user interface (UI) method and system. The traditional global distribution industry faces a multitude of challenges that encompass supply chain management, inventory control, stock keeping unit (SKU) management, compliance, and evolving consumer expectations.

In various industries, such as retail, e-commerce, and supply chain management, the accurate determination and application of special pricing play a critical role in ensuring competitiveness, optimizing sales, and meeting customer demands. Special pricing refers to customized pricing strategies applied to specific scenarios, such as seasonal promotions, volume discounts, customer-specific agreements, or targeted marketing campaigns. These pricing strategies are typically based on a combination of factors, including manufacturer details, product categories, solution types, historical buying patterns, and other relevant variables.

Conventionally, special pricing determination and application processes have been labor-intensive, time-consuming, and prone to errors. Manual intervention and disparate data sources often hindered the ability to make near real-time pricing decisions, resulting in delays and inefficiencies.

The conventional approach to special pricing determination and application in the traditional distribution platforms has been plagued by a multitude of substantial challenges, which have significantly hampered the efficiency of pricing analysts and sales teams. One of the most prominent issues is the absence of a synchronous, real-time solution, severely hindering the ability to make timely pricing decisions. Therefore, the manual calculation and validation of pricing against predefined rules become laborious and time-consuming tasks.

The lack of a synchronous, real-time solution forces pricing analysts and sales teams to rely on disparate data sources and outdated information. This, in turn, introduces inaccuracies in the pricing process, as the data used for determining special pricing may not reflect the latest changes in product availability, market conditions, or promotional campaigns. The delays in accessing and updating this information lead to missed opportunities for competitive pricing, resulting in potential loss of sales and market share.

Moreover, the absence of real-time capabilities exacerbates the complexities associated with managing seasonal promotions and time-sensitive marketing campaigns. Pricing analysts must resort to manual methods to implement such promotions, often resulting in missed timeframes and an inability to adapt swiftly to changing market dynamics. As a result, sales teams may struggle to meet customer demands during peak periods, leading to customer dissatisfaction and lost revenue opportunities.

The labor-intensive and manual nature of special pricing determination and application also render the entire process highly prone to errors. Pricing analysts and sales teams, in their effort to handle a vast array of products and pricing scenarios, are more susceptible to making mistakes. These errors can range from miscalculations in pricing, application of incorrect pricing rules, or overlooking specific customer agreements, ultimately leading to billing discrepancies and customer complaints.

The inefficiencies arising from the lack of a synchronous, real-time solution introduce inconsistencies in pricing across different channels and customer segments. Pricing strategies that should be applied consistently may inadvertently vary due to delays in updating prices, causing confusion among customers and damaging the brand's reputation for fair and transparent pricing practices.

Additionally, the manual nature of the pricing determination process poses a substantial challenge in scaling the pricing operations to handle a growing number of products, customers, and market demands. As the business expands, pricing analysts face increasing workloads, making it increasingly difficult to maintain the same level of accuracy and responsiveness in pricing decisions. Consequently, the lack of scalability may hinder the company's growth potential and hinder its ability to compete effectively in the market.

Furthermore, the disjointed approach to special pricing determination and application causes significant delays in the overall sales process. Pricing analysts must dedicate considerable time to manually process each pricing request, verify compliance with various rules, and then apply the determined pricing to individual or multiple orders. These delays can lead to frustrated customers, missed sales opportunities, and a negative impact on customer loyalty.

These challenges result present a detriment to the overall efficiency of the distribution platform, undermining the company's ability to respond rapidly to market fluctuations, adapt to customer demands, and maintain a competitive edge. In an increasingly dynamic business landscape, the lack of a synchronous, real-time solution for special pricing determination and application proves to be a significant hindrance to success, urging the need for an innovative, automated, and efficient approach to address these problems effectively. The present disclosure seeks to provide a robust solution that overcomes these limitations, offering a streamlined near real-time special pricing determination system that integrates with order processing workflows, paving the way for enhanced competitiveness, accuracy, and customer satisfaction.

Efforts to automate the special pricing calculation and application process have been made in the prior art. However, existing systems and methods have fallen short in terms of scalability, accuracy, and integration with order processing workflows. There is a need for an improved system and method that can automate the near real-time special pricing calculation and application, leveraging intelligent algorithms, caching mechanisms, data exchange, and integration with order processing systems.

Therefore, there is a need for an innovative system and method that overcomes the limitations of existing solutions and provides an automated, accurate, and efficient approach to special pricing calculation and application. The present disclosure addresses these needs and provides a robust system architecture and computerized method for streamlined near real-time special pricing determination and its integration into order processing workflows.

### BRIEF SUMMARY OF THE DISCLOSED EMBODIMENTS

The global distribution industry is at a critical juncture, grappling with an array of challenges that span across multiple domains. These obstacles, which are both historical and emergent, necessitate the crafting of innovative and effective solutions to steer the sector towards growth and efficiency. Among these numerous hurdles, the most significant ones reside within the realms of supply chain management, inventory and compliance issues, SKU management, the shift to direct-to-consumer models, and the rapidly evolving consumer expectations and behavior.

The first key challenge pertains to the management of the supply chain, a central part of the operations for any distributor, but which is not typically within a distributor's core competencies. This gap creates inefficiencies in the system and compounds the difficulties in managing disruptions, which in turn has a direct bearing on a distributor's capacity to deliver products and services efficiently and on time. To add to these challenges, market trends are skewing towards a more direct-to-consumer model. The traditional distribution methodologies, which involved numerous intermediaries, are being gradually displaced. This evolving market dynamic necessitates a significant reassessment and reorientation of existing business models and strategies to ensure alignment with this new market reality.

A problem in the realm of distribution is inventory management. Considering the mercurial nature of market demands and trends, companies must ensure they maintain a flexible supply chain without necessarily holding positions in inventory. This makes the task of promising and delivering goods to customers substantially more complex and challenging. Besides, the sheer necessity of navigating through a myriad of compliance regulations for transporting goods and services across international borders adds an additional layer of complexity to the distribution process. This not only makes the distribution process more intricate and challenging but also imposes an extra layer of vigilance and paperwork to remain compliant.

To compound these challenges further, the issues surrounding the localization of products, varying distribution rights, and managing global SKUs also need to be addressed. The process of reconciling data from different OEMs, each with its unique systems and processes, adds to the complexity. Furthermore, addressing the requirements of localization that are in line with laws and regulations of different jurisdictions adds to the inefficiencies and the potential for errors.

Finally, the landscape of consumer behavior and expectations is rapidly changing. The shift towards ecosystem commerce necessitates the creation of a user-friendly, efficient, and configurable platform for purchasing technology. Traditional methods of customer interaction are quickly losing favor, making it indispensable for companies to evolve and cater to these new customer expectations.

Despite these challenges, the distribution model holds numerous advantages over the direct-to-consumer model. Firstly, it enables manufacturers to focus on their core competencies, leaving the complexities of logistics and distribution to specialized entities. Secondly, distribution networks often have extensive reach, allowing products to be available to customers in far-flung areas that may not be feasible for manufacturers to cover directly. Thirdly, distributors often offer value-added services such as after-sales support, installation, and training that enhance the overall customer experience.

However, for these benefits to materialize and for the distribution model to remain relevant and effective, it is imperative that it evolves and adapts to the emerging challenges. The current pain points need to be addressed, and processes should be made more efficient and streamlined to ensure the sustainability of the distribution model in the evolving market landscape.

### Single Pane of Glass

The Single Pane of Glass (SPoG) disclosed herein can provide a comprehensive solution that aims to address these challenges. It can be configured to provide a holistic, user-friendly, and efficient platform that streamlines the distribution process.

According to some embodiments, SPoG can be configured to address supply chain management by enhancing visibility and control over the supply chain process. Through real-time tracking and analytics, SPoG can deliver valuable insights into inventory levels and the status of goods, ensuring that the process of supply chain management is handled efficiently.

According to some embodiments, SPoG can integrate multiple communication channels (i.e., touchpoints) into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to streamline SKU management and product localization, SPoG integrates data from various OEMs into a single platform. This not only ensures data consistency but also significantly reduces the potential for errors. Furthermore, it provides capabilities to manage and distribute localized SKUs efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, streamlining inventory management, ensuring compliance, simplifying SKU management, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. RTDM offers an innovative solution to address these challenges. RTDM can provide a distributed data architecture to enable real-time data availability across multiple sources and touchpoints. This aspect enhances supply chain visibility, allowing for efficient management and enabling distributors to handle disruptions more effectively.

RTDM enables generation of predictive analytics, a capability that offers a solution for efficient inventory control. By providing insights into demand trends, it aids companies in managing inventory, reducing risks of overstocking or stockouts.

RTDM can also facilitate global compliance, providing compliance data updated in real-time, to ensure distributors are current with international regulations. It significantly reduces the manual tracking burden, enabling integrated cross-border transactions.

The RTDM also simplifies SKU management and localization by integrating data from various OEMs, ensuring data consistency and reducing error potential. Its capabilities for managing and distributing localized SKUs align with specific market needs efficiently.

The RTDM enhances customer experience for all stakeholders with its consolidated and intuitive interface, allowing easy access and transactions of technology, meeting the expectations of a consumer-driven generation of technology partners.

### Advantages of SPoG and RTDM Integration

Integrating the SPoG UI platform with the RTDM enables a consolidated, holistic approach to technical challenges encountered in a distribution platform. Integrating the RTDM's capabilities, SPoG can enhance supply chain visibility, streamline inventory management, ensure compliance, simplify SKU management, and deliver a superior customer experience. The real-time tracking and analytics offered by RTDM improve SPoG's ability to manage the supply chain and inventory effectively. It provides accurate and up-to-date information, enabling distributors to make informed decisions quickly. Integrating SPoG with RTDM also ensures data consistency and reduces errors and latency in SKU management and pricing. By providing a centralized platform for managing data from various OEMs, it simplifies product localization and helps to align with market needs.

### Special Pricing Determination

The present disclosure provides an innovative system and method for automated near real-time special pricing calculation and application, addressing the limitations of existing solutions. The system leverages intelligent algorithms, caching mechanisms, data exchange, and integration with order processing workflows to streamline the pricing determination process, minimize manual effort, and reduce potential errors.

In the prior art, special pricing determination and application processes have been labor-intensive, time-consuming, and prone to errors. Manual intervention and disparate data sources often hindered the ability to make timely pricing decisions, resulting in delays and inefficiencies. Existing automated systems have failed to provide the necessary scalability, accuracy, and integration with order processing workflows.

The present disclosure overcomes these limitations by introducing a synchronous system architecture that incorporates special pricing algorithms, caching, an integration module, and a pricing validation and maintenance module. These components work synergistically to ensure synchronized and accurate pricing determination, validate pricing programs against predefined rules, and automate the creation and application of special pricing in near real-time.

The system also integrates and synchronizes with order processing workflows through APIs, facilitating the accurate and timely application of special pricing to individual or multiple orders. Furthermore, XML and EDI integration enable data exchange between different systems involved in the order fulfillment process, ensuring accurate and industry-standard-compliant data transmission.

The present disclosure revolutionizes the near real-time special pricing calculation and application process, reducing manual effort, minimizing errors, and enhancing overall sales effectiveness and customer satisfaction. By automating pricing determination, the system enables faster response to market conditions and customer requirements, improving competitiveness and optimizing sales.

Overall, the present disclosure provides a comprehensive solution that addresses the shortcomings of existing systems and methods, delivering a streamlined, accurate, and efficient approach to near real-time special pricing calculation and application. The inventive system and method empower businesses in various industries to make data-driven pricing decisions, improve operational efficiency, and enhance customer experiences.

### BRIEF DESCRIPTION OF THE DRAWINGS

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates one embodiment of a system for supply chain management.
FIG. 4 depicts an embodiment of an advanced distribution platform including System for managing a complex distribution network, which can be an embodiment of System, and provides a technology distribution platform for optimizing the management and operation of distribution networks.
FIG. 5 illustrates an RTDM module, according to an embodiment.
FIG. 6 illustrates a SPoG UI, according to an embodiment.
FIG. 7 is a flow diagram of a method for performing comprehensive supply chain management operations using the SPoG UI, according to some embodiments of the present disclosure.
FIG. 8 is a flow diagram of a method for vendor onboarding using the SPoG UI, according to some embodiments of the present disclosure.
FIG. 9 is a flow diagram of a method for reseller onboarding using the SPoG UI, according to some embodiments of the present disclosure.
FIG. 10 is a flow diagram of a method for customer and end customer onboarding using the SPoG UI, according to some embodiments of the present disclosure.
FIG. 11 depicts an embodiment of a system for determining special pricing in a distribution network, according to some embodiments.
FIG. 12 is a flow diagram of a method for determining special pricing in a distribution network, according to some embodiments of the present disclosure.
FIG. 13 is a diagram of a system for determining special pricing in a distribution network, according to some embodiments.
FIG. 14 is a block diagram of example components of device, according to some embodiments of the present disclosure.
FIGS. 15A to 14Q depict various screens and functionalities of the SPoG UI, according to some embodiments.

### DETAILED DESCRIPTION OF THE DISCLOSED EMBODIMENTS

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

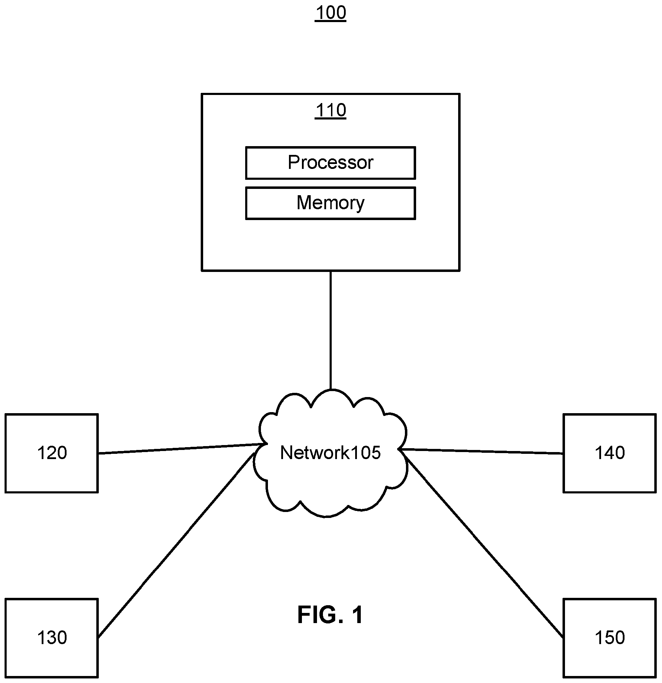

FIG. 1 illustrates an operating environment 100 of a distribution platform, referred to as system 110 in this embodiment. System 110 operates within the context of an information technology (IT) distribution model, catering to various stakeholders such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of system 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through system 110, empowering them to make informed decisions and optimize their IT infrastructure.

End customers 130 are the ultimate beneficiaries of the IT solutions provided by system 110. They may include businesses or individuals who utilize IT products and services to enhance their operations, productivity, or daily activities. End customers rely on system 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a crucial role within the operating environment of system 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage system 110 to streamline their supply chain operations, manage pricing and promotions, and gain insights into customer preferences and market trends. By integrating with system 110, vendors can expand their reach, access new markets, and enhance their overall visibility and competitiveness.

Resellers 150 are intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging system 110, resellers can enhance their customer relationships, optimize their product offerings, and increase their revenue streams.

Within the operating environment of system 110, there are various dynamics and characteristics that contribute to its effectiveness. These dynamics include real-time data exchange, integration with existing enterprise systems, scalability, and flexibility. System 110 ensures that relevant data is exchanged in real-time between stakeholders, enabling accurate decision-making and timely actions. Integration with existing enterprise systems such as enterprise resource planning (ERP) systems, customer relationship management (CRM) systems, and warehouse management systems allows for integrated communication and interoperability, eliminating data silos and enabling end-to-end visibility.

Scalability and flexibility are key characteristics of system 110. It can accommodate the growing demands of the IT distribution model, whether it involves an expanding customer base, an increasing number of vendors, or a wider range of IT products and services. System 110 is designed to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of system 110 within the IT distribution model encompasses customers 120, end customers 130, vendors 140, resellers 150, and other entities involved in the distribution process. System 110 serves as a centralized platform that facilitates efficient collaboration, communication, and transactional processes between these stakeholders. By leveraging real-time data exchange, integration, scalability, and flexibility, System 110 empowers stakeholders to optimize their operations, enhance customer experiences, and drive business success within the IT distribution ecosystem.

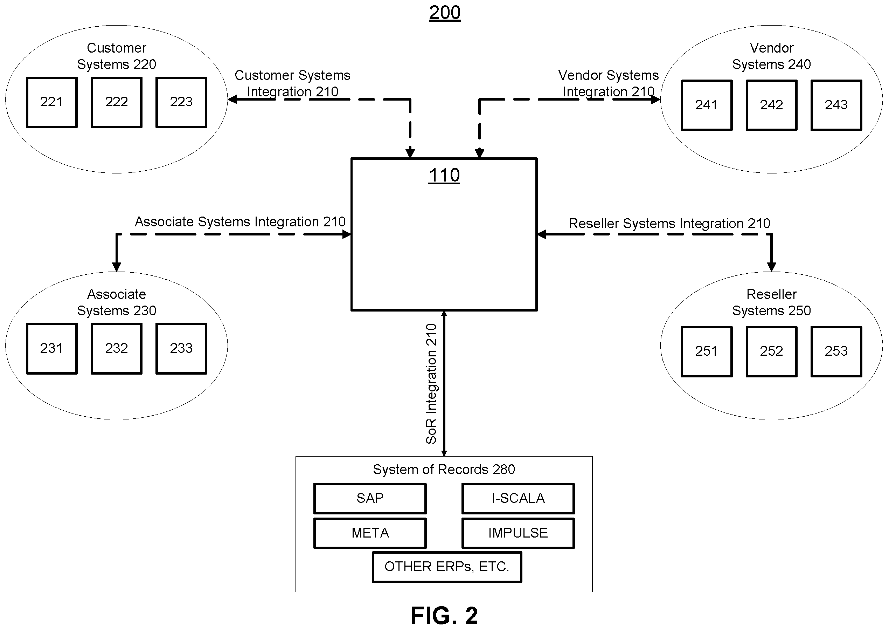

FIG. 2 illustrates an operating environment 200 of the distribution platform, which builds upon the elements introduced in FIG. 1. Within this operating environment, integration points 210 facilitate integrated data flow and connectivity between various customer systems 220, associate systems 230, vendor systems 240, reseller systems 250, and other entities involved in the distribution process. The diagram showcases the interconnectedness and the mechanisms that enable efficient collaboration and data-driven decision-making.

Operating environment 200 can include system 110 as a distribution platform that serves as the central hub for managing and facilitating the distribution process. System 110 can be configured to perform functions and operations as a bridge between customer systems 220, vendor systems 240, reseller systems 250, and other entities within the ecosystem. It can integrate communication, data exchange, and transactional processes, providing stakeholders with a unified and streamlined experience. Moreover, operating environment 200 can include one or more integration points 210 to ensure smooth data flow and connectivity. These integration points include:

Customer System Integration: Integration point 210 can enable system 110 to connect with customer systems 220, enabling efficient data exchange and synchronization. Customer systems 220 may include various entities such as customer system 221, customer system 222, and customer system 223. Integration with customer systems 220 empowers customers to access real-time inventory information, pricing details, order tracking, and other relevant data, enhancing their visibility and decision-making capabilities.

Associate System Integration: Integration point 210 can enable system 110 to connect with associate systems 230, enabling efficient data exchange and synchronization. Associate systems 230 may include various entities such as associate system 231, associate system 233, and associate system 233. Integration with associate systems 220 empowers customers to access real-time inventory information, pricing details, order tracking, and other relevant data, enhancing their visibility and decision-making capabilities.

Vendor System Integration: Integration point 210 facilitates the integrated connection between system 110 and vendor systems 240. Vendor systems 240 may include entities such as vendor system 241, vendor system 242, and vendor system 243, representing the inventory management systems, pricing systems, and product catalogs employed by vendors. Integration with vendor systems 240 ensures that vendors can efficiently update their product offerings, manage pricing and promotions, and receive real-time order notifications and fulfillment details.

Reseller System Integration: Integration point 210 provides capabilities for reseller systems 250 to connect with system 110. Reseller systems 250 may encompass entities such as reseller system 251, reseller system 252, and reseller system 253, representing the sales systems, customer management systems, and service delivery platforms employed by resellers. Integration with reseller systems 250 empowers resellers to access up-to-date product information, manage customer accounts, track sales performance, and provide value-added services to their customers.

Other Entity System Integration: Integration point 210 also enables connectivity with other entities involved in the distribution process. These entities may include entities such as entity system 271, entity system 272, and entity system 273. Integration with these systems ensures integrated communication and data exchange, facilitating collaboration and efficient distribution processes.

Integration point 210 also enables connectivity with System of Records 280, for additional data management and integration. Representing System of Records 280 can represent enterprise resource planning (ERP) systems or customer relationship management (CRM) systems, including both future systems as well as legacy ERP systems such as SAP, Impulse, META, I-SCALA, and others. System of Records can include one or more storage repositories of critical and legacy business data. It facilitates integration of data exchange and synchronization between the distribution platform, System 110, and the ERPs, enabling real-time updates and ensuring the availability of accurate and up-to-date information. Integration points 210 establish connectivity between the System of Records 280 and the distribution platform, allowing stakeholders to leverage rich data stored in the ERPs for efficient collaboration, data-driven decision-making, and streamlined distribution processes. These systems represent the internal systems utilized by customers, vendors, and others.

Integration points 210 within the operating environment 200 are facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable integrated data exchange.

In some embodiments, System 110 can incorporates authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable stakeholders to operate within a connected ecosystem. Data generated at various stages of the distribution process, including customer orders, inventory updates, shipment details, and sales analytics, flows efficiently between customer systems 220, vendor systems 240, reseller systems 250, and other entities. This data exchange facilitates real-time visibility, enables data-driven decision-making, and enhances operational efficiency throughout the distribution platform.

In some embodiments, System 110 leverages advanced technologies such as Typescript, NodeJS, ReactJS, .NET Core, C#, and other suitable technologies to support the integration points 210 and enable integrated communication within the operating environment 200. These technologies provide a robust foundation for system 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable stakeholders to operate within a connected ecosystem. Data generated at various touchpoints, including customer orders, inventory updates, pricing changes, or delivery status, efficiently flows between the different entities, systems, and components. The integrated data is processed, harmonized, and made available in real-time to relevant stakeholders through system 110. This real-time access to accurate and up-to-date information empowers stakeholders to make informed decisions, optimize supply chain operations, and enhance customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

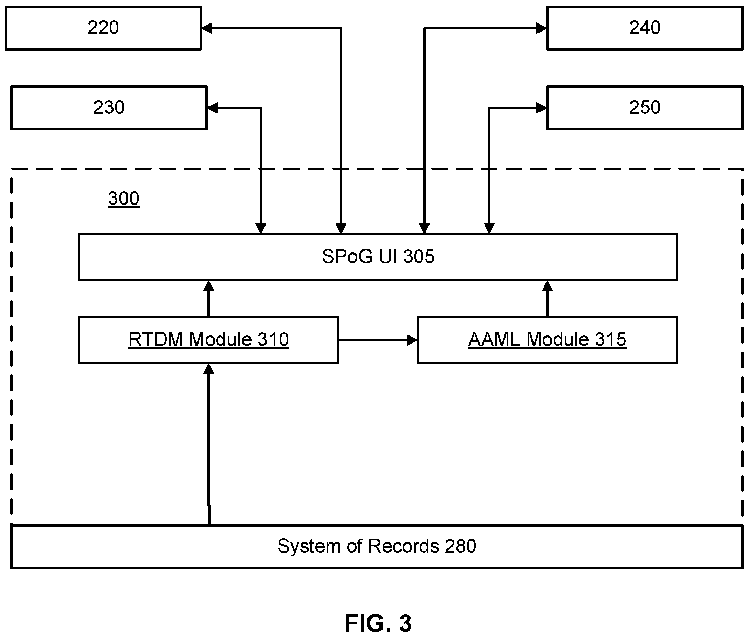

FIG. 3 illustrates a system 300 for supply chain management. System 300 is a supply chain management solution designed to address the challenges faced by fragmented supply chain ecosystems in the global distribution industry. System 300 can include several interconnected components and modules that work in harmony to optimize supply chain operations, enhance collaboration, and drive business efficiency.

In some embodiments, SPoG UI 305 serves as a centralized user interface, providing stakeholders with a unified view of the entire supply chain. It consolidates information from various sources and presents real-time data, analytics, and functionalities tailored to the specific roles and responsibilities of users. By offering a customizable and intuitive dashboard-style layout, the SPoG UI 305 enables users to access relevant information and tools, empowering them to make data-driven decisions and efficiently manage their supply chain activities.

For example, a logistics manager can use the SPoG UI 305 to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

In some embodiments, SPoG UI 305 integrates with other modules of system 300, facilitating real-time data exchange, synchronized operations, and streamlined workflows. Through API integrations, data synchronization mechanisms, and event-driven architectures, SPoG UI 305 ensures smooth information flow and enables collaborative decision-making across the supply chain ecosystem.

For instance, when a purchase order is generated in the SPoG UI 305, system 300 automatically updates the inventory levels, triggers a notification to the warehouse management system, and initiates the shipping process. This integration enables efficient order fulfillment, reduces manual errors, and enhances overall supply chain visibility.

In some embodiments, Real-Time Data Mesh (RTDM) module 310 can be configured to provide an integrated flow of data within the supply chain ecosystem. It aggregates data from multiple sources, harmonizes it, and ensures its availability in real-time.

In one non limiting example, RTDM module 310 can collect data from System of Records 280, which can represent various systems, including disparate inventory management systems, point-of-sale terminals, and customer relationship management systems. It harmonizes this data by aligning formats, standardizing units of measurement, and reconciling any discrepancies. The harmonized data is then made available in real-time, allowing stakeholders to access accurate and up-to-date information across the supply chain.

In some embodiments, RTDM module 310 can be configured to capture changes in data across multiple transactional systems in real-time. It employs a sophisticated Change Data Capture (CDC) mechanism that constantly monitors the transactional systems, detecting any updates or modifications. The CDC component is specifically designed to work with various transactional systems, which can include future and legacy ERP systems, Customer Relationship Management (CRM) systems, and other enterprise-wide systems, ensuring compatibility and flexibility for businesses operating in diverse environments.

By providing continuous access to real-time data, stakeholders can make timely decisions and respond quickly to changing market conditions. For example, if RTDM module 310 detects a sudden spike in demand for a particular product, it can trigger alerts to the production team, enabling them to adjust manufacturing schedules and prevent stockouts.

In some embodiments, RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

System 300 can also include Advanced Analytics and Machine Learning (AAML) module 315. AAML module 315 can leverage powerful analytics tools and algorithms such as Apache Spark, TensorFlow, or scikit-learn, the AAML module extracts valuable insights from the collected data. It performs advanced analytics, predictive modeling, anomaly detection, and other machine learning operations.

For instance, AAML module 315 can analyze historical sales data to identify seasonal patterns and predict future demand. It can generate forecasts that help optimize inventory levels, ensure stock availability during peak seasons, and minimize excess inventory costs. By leveraging machine learning algorithms, AAML module 315 automates repetitive tasks, predicts customer preferences, and optimizes supply chain processes.

In addition to demand forecasting, AAML module 315 can provide insights into customer behavior, enabling targeted marketing campaigns and personalized customer experiences. For example, by analyzing customer data, the module can identify cross-selling or upselling opportunities and recommend relevant products to individual customers.

Furthermore, AAML module 315 can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 can perform integration and interoperability functions to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate integrated communication and interoperability among different modules and components, creating a holistic and connected supply chain ecosystem.

The implementation and deployment of system 300 can be tailored to meet specific business needs. In some non-limiting examples, it can be deployed as a cloud-native solution using containerization technologies like Docker^{®} and orchestration frameworks like Kubernetes^{®}. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain management is a comprehensive and innovative solution that addresses the challenges faced by fragmented supply chain ecosystems. It combines the power of the SPoG UI 305, RTDM module 310, and AAML module 315, along with integration with existing systems. By leveraging a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain management.

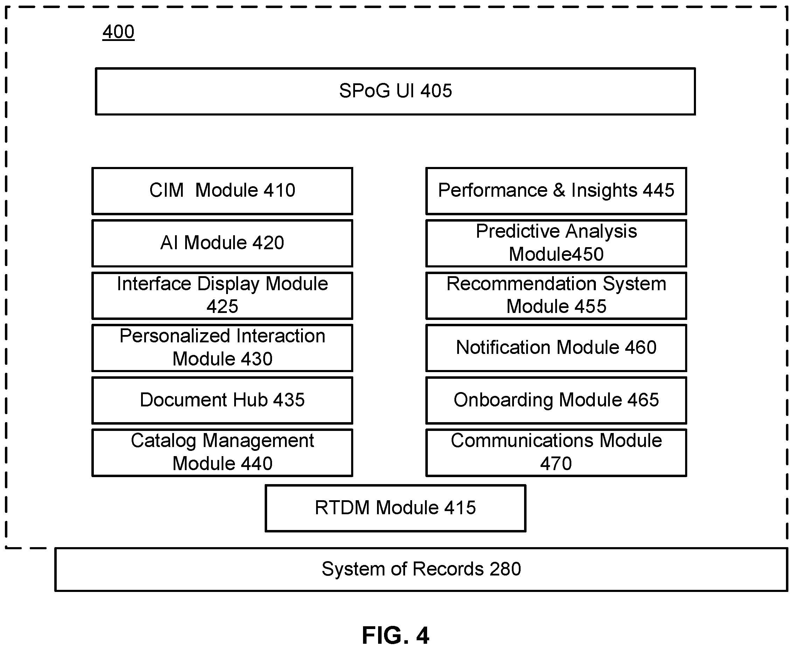

FIG. 4 depicts an embodiment of an advanced distribution platform including system 400 for managing a complex distribution network, which can be an embodiment of system 300, and provides a technology distribution platform for optimizing the management and operation of distribution networks. System 400 includes several interconnected modules, each serving specific functions and contributing to the overall efficiency of supply chain operations. In some embodiments, these modules can include SPoG UI 405, Customer Interaction Module (CIM) 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470.

System 400, as an embodiment of system 300, leverages a range of technologies and algorithms to integrate and consolidate supply chain management. These technologies and algorithms facilitate efficient data processing, personalized interactions, real-time analytics, secure communication, and effective management of documents, catalogs, and performance metrics.

In some embodiments, SPoG UI 405, in some embodiments, serves as the central interface within system 400, providing stakeholders with a unified view of the entire distribution network. It utilizes frontend technologies such as ReactJS, TypeScript, and Node.js to create interactive and responsive user interfaces. These technologies enable the SPoG UI 405 to deliver a user-friendly experience, allowing stakeholders to access relevant information, navigate through different modules, and perform tasks efficiently.

In some embodiments, CIM 410, or Customer Interaction Module, employs algorithms and technologies such as Oracle^{®} Eloqua^{®}, Adobe^{®} Target, and Okta^{®} to manage customer relationships within the distribution network. These technologies enable the module to handle customer data securely, personalize customer experiences, and provide integrated access control for stakeholders.

In some embodiments, RTDM module 415, or Real-Time Data Mesh module, is a critical component of system 400 that ensures the smooth flow of data across the supply chain ecosystem. It utilizes technologies such as Apache^{®} Kafka^{®}, Apache^{®} Flink^{®}, or Apache^{®} Pulsar for data ingestion, processing, and stream management. These technologies enable the RTDM module 415 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows stakeholders to access up-to-date and accurate information for informed decision-making.

In some embodiments, AI module 420 within system 400 leverages advanced analytics and machine learning algorithms, including Apache^{®} Spark, TensorFlow^{®}, and scikit-learn^{®}, to extract valuable insights from data. These algorithms enable the module to automate repetitive tasks, predict demand patterns, optimize inventory levels, and improve overall supply chain efficiency. For example, the AI module 420 can utilize predictive models to forecast demand, allowing stakeholders to optimize inventory management and minimize stockouts or overstock situations.

In some embodiments, Interface Display Module 425 focuses on presenting data and information in a clear and user-friendly manner. It utilizes technologies such as HTML, CSS, and JavaScript frameworks like ReactJS to create interactive and responsive user interfaces. These technologies allow stakeholders to visualize data using various data visualization techniques, such as graphs, charts, and tables, enabling efficient data comprehension, comparison, and trend analysis.

In some embodiments, Personalized Interaction Module 430 utilizes customer data, historical trends, and machine learning algorithms to generate personalized recommendations for products or services. In some non-limiting examples, it can be implemented utilizing Adobe^{®} Target, Apache^{®} Spark, and TensorFlow^{®} for data analysis, modeling, and delivering targeted recommendations. For example, the module can analyze customer preferences and purchase history to provide personalized product recommendations, enhancing customer satisfaction and driving sales.

In some embodiments, Document Hub 435 serves as a centralized repository for storing and managing documents within system 400. In some non-limiting examples, it can be implemented utilizing SeeBurger^{®} and Elastic Cloud for efficient document management, storage, and retrieval. For instance, the Document Hub 435 can employ SeeBurger's document management capabilities to categorize and organize documents based on their types, such as contracts, invoices, product specifications, or compliance documents, allowing stakeholders to easily access and retrieve relevant documents when needed.

In some embodiments, Catalog Management Module 440 enables the creation, management, and distribution of up-to-date product catalogs. It ensures that stakeholders have access to the latest product information, including specifications, pricing, availability, and promotions. In some non-limiting examples, it can be implemented utilizing Kentico^{®} and Akamai^{®} to integrate and consolidate catalog updates, content delivery, and caching. For example, the module can leverage Akamai's content delivery network (CDN) to deliver catalog information to stakeholders quickly and efficiently, regardless of their geographical location.

In some embodiments, Performance and Insight Markers Display 445 collects, analyzes, and visualizes real-time performance metrics and insights related to supply chain operations. It utilizes tools like Splunk^{®} and Datadog^{®} to enable effective performance monitoring and provide actionable insights. For instance, the module can utilize Splunk's log analysis capabilities to identify performance bottlenecks in the supply chain, enabling stakeholders to take proactive measures to optimize operations.

In some embodiments, Predictive Analytics Module 450 employs machine learning algorithms and predictive models to forecast demand patterns, optimize inventory levels, and enhance overall supply chain efficiency. It utilizes technologies such as Apache^{®} Spark and TensorFlow^{®} for data analysis, modeling, and prediction. For example, the module can utilize TensorFlow's deep learning capabilities to analyze historical sales data and predict future demand, allowing stakeholders to optimize inventory levels and minimize costs.

In some embodiments, Recommendation System Module 455 focuses on providing intelligent recommendations to stakeholders within the distribution network. It generates personalized recommendations for products or services based on customer data, historical trends, and machine learning algorithms. In some non-limiting examples, it can be implemented utilizing Adobe^{®} Target and Apache^{®} Spark for data analysis, modeling, and delivering targeted recommendations. For instance, the module can leverage Adobe Target's recommendation engine to analyze customer preferences and behavior, and deliver personalized product recommendations across various channels, enhancing customer engagement and driving sales.

In some embodiments, Notification Module 460 enables the distribution of real-time notifications to stakeholders regarding important events, updates, or alerts within the supply chain. In some non-limiting examples, it can be implemented utilizing APIgee^{®} X and TIBCO^{®} for message queues, event-driven architectures, and integrated notification delivery. For example, the module can utilize TIBCO's messaging infrastructure to send real-time notifications to stakeholders' devices, ensuring timely and relevant information dissemination.

In some embodiments, Self-Onboarding Module 465 facilitates the onboarding process for new stakeholders entering the distribution network. It provides guided steps, tutorials, or documentation to help users become familiar with the system and its functionalities. In some non-limiting examples, it can be implemented utilizing technologies such as Okta^{®} and Kentico^{®} to ensure secure user authentication, access control, and self-learning resources. For instance, the module can utilize Okta's identity and access management capabilities to securely onboard new stakeholders, providing them with appropriate access permissions and guiding them through the system's functionalities.

In some embodiments, Communication Module 470 enables integrated and consolidated communication and collaboration within system 400. It provides channels for stakeholders to interact, exchange messages, share documents, and collaborate on projects. In some non-limiting examples, it can be implemented utilizing APIgee^{®} Edge and Adobe^{®} Launch are employed to facilitate secure and efficient communication, document sharing, and version control. For example, the module can utilize APIgee Edge's API management capabilities to ensure secure and reliable communication between stakeholders, enabling them to collaborate effectively.

Thereby, System 400 can incorporate various modules that utilize a diverse range of technologies and algorithms to optimize supply chain management. These modules, including SPoG UI 405, CIM 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain management.

### REAL TIME DATA MESH

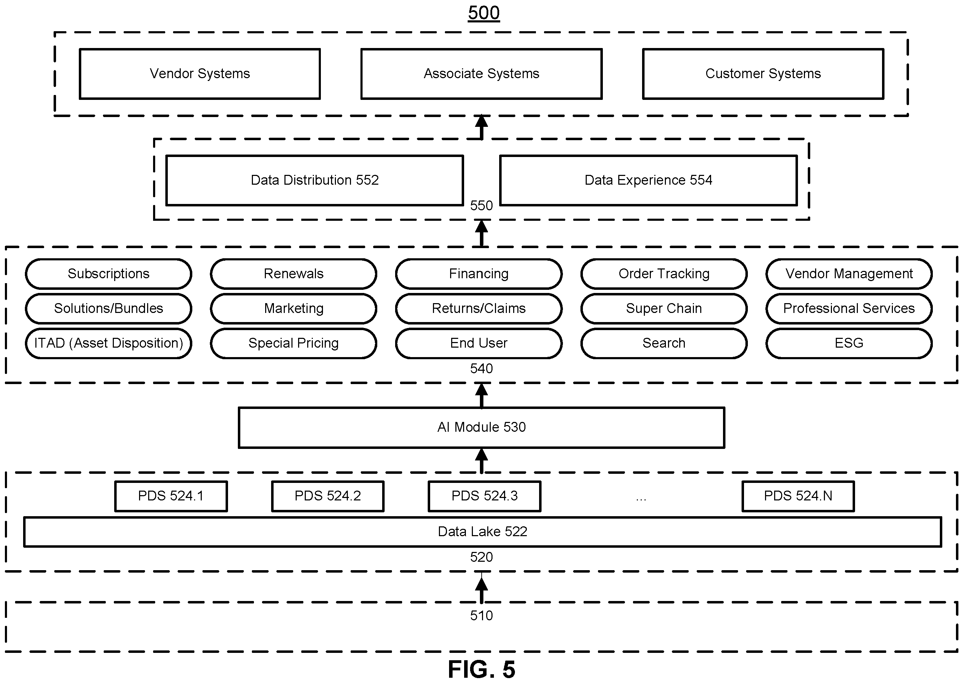

FIG. 5 illustrates RTDM module 500, according to an embodiment. RTDM module 500, which can be an embodiment of RTDM module 310, can include interconnected components, processes, and sub-systems configured to enable real-time data management and analysis.

In some embodiments, RTDM module 500, as depicted in FIG. 5, represents an effective data mesh and change capture component within the overall system architecture. The module is designed to provide real-time data management and harmonization capabilities, enabling efficient operations within the supply chain management domain.

RTDM module 500 can include an integration layer 510 (also referred to as a "system of records") that integrates with various enterprise systems. These enterprise systems can include ERPs such as SAP^{®}, Impulse, META, and I-SCALA, among others, and other data sources. Integration layer 510 can process data exchange and synchronization between RTDM module 500 and these systems. Data feeds are established to retrieve relevant information from the system of records, such as sales orders, purchase orders, inventory data, and customer information. These feeds enable real-time data updates and ensure that the RTDM module operates with the most current and accurate data.

RTDM module 500 can include data layer 520 configured to process and translate data for retrieval and analysis. RTDM module 500 generates a data mesh as a cloud-based infrastructure designed to provide scalable and fault-tolerant data storage capabilities. Within the data mesh, multiple Purposive Datastores (PDS) are deployed to store specific types of data, such as customer data, product data, or inventory data. Each PDS is optimized for efficient data retrieval based on specific use cases and requirements. The PDSes are configured to store specific types of data, such as customer data, product data, finance data, and more. These PDS serve as repositories for harmonized and standardized data, ensuring data consistency and integrity across the system.

In some embodiments, RTDM module 500 implements a data replication mechanism to capture real-time changes from multiple data sources, including transactional systems like ERPs (e.g., SAP^{®}, Impulse, META, I-SCALA). The captured data is then processed and harmonized on-the-fly, transforming it into a standardized format suitable for analysis and integration. This process ensures that the data is readily available and up-to-date within the data mesh, facilitating real-time insights and decision-making.

More specifically, data layer 520 within the RTDM module 500 can be configured as a powerful and flexible foundation for managing and processing data within the supply chain ecosystem. In some embodiments, data layer 520 can encompasses a highly scalable and robust data lake, which can be referred to as data lake 522, along with a set of purposive datastores (PDSes), which can be denoted as PDSes 524.1 to 524.N. These components work in harmony to ensure efficient data management, harmonization, and real-time availability.

In some embodiments, data layer 520 includes data lake 522, a novel storage and processing infrastructure designed to handle the ever-increasing volume, variety, and velocity of data generated within the supply chain. Built upon a scalable distributed file system, such as Apache^{®} Hadoop^{®} Distributed File System (HDFS) or Amazon^{®} S3, the data lake can provide a unified and scalable platform for storing both structured and unstructured data. Leveraging the elasticity and fault-tolerance of cloud-based storage, data lake 522 can aggregate and accommodate the influx of data from diverse sources.

Associated with data lake 522, a plurality of purposive datastores, PDSes 524.1 to 524.N, can be employed. Each PDS 524 can function as a purpose-built repository optimized for storing and retrieving specific types of data relevant to the supply chain domain. In some non-limiting examples, PDS 524.1 may be dedicated to customer data, storing information such as customer profiles, preferences, and transaction history. PDS 524.2 may be focused on product data, encompassing details about SKU codes, descriptions, pricing, and inventory levels. These purposive datastores allow for efficient data retrieval, analysis, and processing, catering to the diverse needs of supply chain stakeholders.

To ensure real-time data synchronization, data layer 520 can be configured to employ one or more sophisticated change data capture (CDC) mechanisms. These CDC mechanisms are integrated with the transactional systems, such as legacy ERPs like SAP^{®}, Impulse, META, and I-SCALA, as well as other enterprise-wide systems. CDC constantly monitors these systems for any updates, modifications, or new transactions and captures them in real-time. By capturing these changes, data layer 520 ensures that the data within the data lake 522 and PDSes 524 remains up-to-date, providing stakeholders with real-time insights into the supply chain ecosystem.

In some embodiments, data layer 520 can be implemented to facilitate integration with existing enterprise systems using one or more frameworks, such as .NET or Java, ensuring compatibility with a wide range of existing systems and providing flexibility for customization and extensibility. For example, data layer 520 can utilize the Java technology stack, including frameworks like Spring and Hibernate^{®}, to facilitate integration with a system of records having a population of diverse ERP systems and other enterprise-wide solutions. This can facilitate smooth data exchange, process automation, and end-to-end visibility across the supply chain.

In some embodiments, to facilitate data processing and analytics, data layer 520 can include one or more distributed computing frameworks, such as Apache^{®} Spark or Apache^{®} Flink in some non-limiting examples. These frameworks can enable parallel processing and distributed computing across large-scale datasets stored in the data lake and PDSes. By leveraging these frameworks, supply chain stakeholders can perform complex analytical tasks, apply machine learning algorithms, and derive valuable insights from the data. For instance, data layer 520 can leverage Apache Spark's machine learning libraries to develop predictive models for demand forecasting, optimize inventory levels, and identify potential supply chain risks.

In some embodiments, data layer 520 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 520 can implement data lineage and audit trail mechanisms, allowing stakeholders to trace the origin and history of data, ensuring data integrity and compliance with regulatory requirements.

In some embodiments, data layer 520 can be deployed in a cloud-native environment, leveraging containerization technologies such as Docker^{®} and orchestration frameworks like Kubernetes^{®}. This approach ensures scalability, resilience, and efficient resource allocation. For example, data layer 520 can be deployed on cloud infrastructure provided by AWS^{®}, Azure^{®}, or Google^{®} Cloud, utilizing their managed services and scalable storage options. This allows for efficient scaling of resources based on demand, minimizing operational overhead and providing an elastic infrastructure for managing supply chain data.

Data layer 520 of RTDM module 500 can incorporate a highly scalable data lake, data lake 522, along with purpose-built PDSes, PDSes 524.1 to 524.N, and employing sophisticated CDC mechanisms, data layer 520 ensures efficient data management, harmonization, and real-time availability. The integration of diverse technology stacks, such as .NET or Java, and distributed computing frameworks like Apache^{®} Spark, enables powerful data processing, advanced analytics, and machine learning capabilities. With robust data governance and security measures, data layer 520 ensures data integrity, confidentiality, and compliance. Through its scalable infrastructure and efficient integration with existing systems, data layer 520 empowers supply chain stakeholders to make data-driven decisions, optimize operations, and drive business success in the dynamic and complex supply chain landscape.

RTDM module 500 can include an AI module 530 configured to implement one or more algorithms and machine learning models to analyze the stored data in data layer 520 and derive meaningful insights. In some non-limiting examples, AI module 530 can apply predictive analytics, anomaly detection, and optimization algorithms to identify patterns, trends, and potential risks within the supply chain. AI module 530 can continuously learn from new data inputs and adapt its models to provide accurate and up-to-date insights. AI module 530 can generate predictions, recommendations, and alerts and publish such insights to dedicated data feeds.

Data engine layer 540 can comprise a set of interconnected systems responsible for specialized data ingestion, processing, transformation, and integration. Within the RTDM module 500, these systems include a collection of headless engines 540 operate autonomously, representing distinct functionalities. These engines represent distinct functionalities within the system and can include, for example, one or more recommendation engines, insights engines, and subscription management engines. Non-limiting examples of these headless engines include engines for subscriptions, solutions/bundles, ITAD (IT Asset Disposition), renewals, marketing, special pricing, financing, returns/claims, end user, order tracking, super chain, search, vendor management, professional services, and ESG (Environmental, Social, and Governance). These headless engines leverage the harmonized data stored in the data mesh to deliver specific business logic and services. Engines 540 can leverage the harmonized data stored in the data mesh to deliver specific business logic and services. Each engine is designed to be pluggable, allowing for flexibility and future expansion of the module's capabilities.

These systems can be configured to receive data from multiple sources, such as transactional systems, IoT devices, and external data providers. The data ingestion process involves extracting data from these sources and transforming it into a standardized format. Data processing algorithms are applied to cleanse, aggregate, and enrich the data, making it ready for further analysis and integration.

Further, to facilitate integration and access to RTDM module 500, a data distribution mechanism 545 can be employed. Data distribution mechanism 545 can be configured to include one or more APIs to facilitate distribution of data from the data mesh and engines to various endpoints, including user interfaces, micro front-ends, and external systems.

Experience layer 550 focuses on delivering an intuitive and user-friendly interface for interacting with supply chain data. Experience layer 550 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 500 for supply chain management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and efficient integration with existing enterprise systems. The technical feeds and retrievals within the module ensure that users can retrieve relevant, up-to-date information and insights to make informed decisions and optimize supply chain operations. Accordingly, RTDM module 500 facilitates supply chain management by providing a scalable, real-time data management solution. Its innovative architecture allows for the rich integration of disparate data sources, efficient data harmonization, and advanced analytics capabilities. The module's ability to replicate and harmonize data from diverse ERPs, while maintaining auditable and repeatable transactions, provides a distinct advantage in enabling a unified view for vendors, resellers, customers, end customers, and other entities in a distribution system, including an IT distribution system.

### SINGLE PANE OF GLASS UI

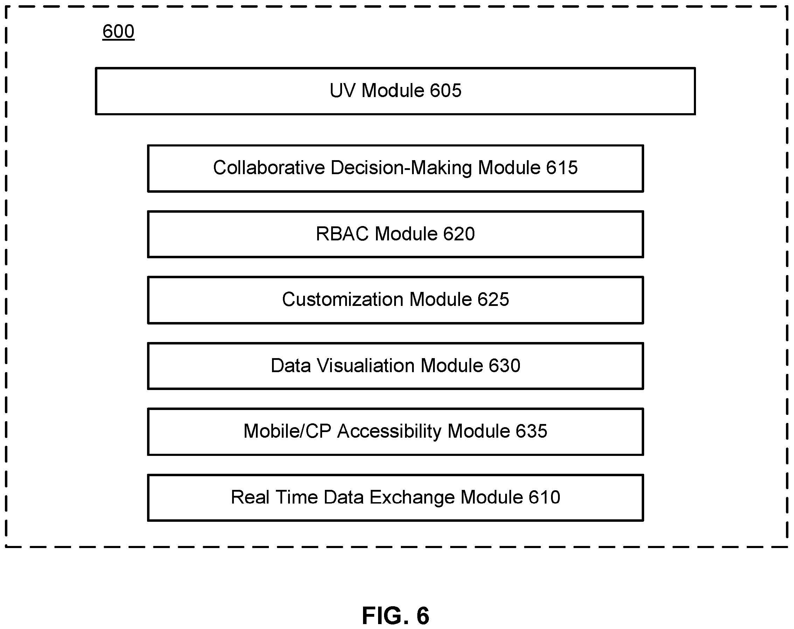

FIG. 6 illustrates an SPoG UI, according to an embodiment, generally indicated as SPoG UI 600. In some embodiments, SPoG UI 600, which can be an embodiment of SPoG UI 305, represents a comprehensive and intuitive user interface designed to provide stakeholders with a unified and customizable view of the entire supply chain ecosystem. It combines a range of features and functionalities that enable users to gain a comprehensive understanding of the supply chain and efficiently manage their operations.

SPoG 600 can incorporate High-Velocity Data in Data-Rich Environments. In contemporary data-rich environments, conventional UI designs frequently grapple with presenting a large amount of information in an understandable, efficient, and visually appealing manner. The challenge intensifies when data is dynamic, changing in real-time, and needs to be displayed effectively in single-pane environments that emphasize clean, white-space-oriented designs.

SPoG UI 600 can integrate capabilities with the RTDM module 310/500, stakeholders to provide a powerful and user-friendly interface for supply chain management. In some embodiments, SPoG UI 600 can include Unified View (UV) Module 605 to provide a customizable and holistic view of the supply chain, and Real-Time Data Exchange Module 610 to ensure accurate and up-to-date data synchronization based on the RTDM module 310/500. Collaborative Decision-Making Module 615 promotes effective communication and collaboration between populations of diverse groups. RBAC Module 620 can be configured to secure access control. Customization Module 625, Data Visualization Module 630, and Mobile and Cross-Platform Accessibility Module 635 can be configured to enhance the user experience, data analysis, and accessibility, respectively. In some embodiments, the above-mentioned modules can enable stakeholders to make informed decisions, optimize supply chain operations, and drive business efficiency within the supply chain ecosystem.

SPoG UI 600 can include UV Module 605, which provides stakeholders with a centralized and customizable dashboard-style layout. This module allows users to access real-time data, analytics, and functionalities tailored to their specific roles and responsibilities within the supply chain ecosystem. The UV Module 605 serves as a single-entry point for users, offering a holistic and comprehensive view of the supply chain operations and empowering them to make data-driven decisions. UV module 605 can be configured to manage real-time data efficiently, maintaining a visually clean interface without compromising performance. This innovative approach includes a unique configuration of the UI structure, responsive data visualizations, real-time data handling methods, adaptive information architecture, and white space optimization.

UV module 605 can be structured around a grid-based layout system, leveraging CSS Grid and Flexbox technologies. This structure offers the flexibility to create a fluid layout with elements that adjust automatically to the available space and content. HTML5 and CSS3 serve as the foundational technologies for creating the UI, while JavaScript, specifically React.js, manages the dynamic aspects of the UI.

SPoG UI 600 can integrate UV module 605 with Real-Time Data Exchange Module 610, to facilitate continuous exchange of data between SPoG UI 600 and RTDM module 310, to leverage one or more data sources, which can include one or more ERPs, CRMs, or other sources. Through this module, stakeholders can access up-to-date, accurate, and harmonized data. Real-time data synchronization ensures that the information presented in SPoG UI 600 reflects the latest insights and developments across the supply chain. This integration enables stakeholders to make informed decisions based on accurate and synchronized data.

In some embodiments, Collaborative Decision-Making Module 615 within SPoG UI 600 fosters real-time collaboration and communication among stakeholders. This module enables the exchange of information, initiation of workflows, and sharing of insights and recommendations. By integrating with the RTDM module 310/500, the Collaborative Decision-Making Module 615 ensures that stakeholders can collaborate effectively based on accurate and synchronized data. This promotes overall operational efficiency and collaboration within the supply chain ecosystem.

To ensure secure and controlled access to functionalities and data, SPoG UI 600 incorporates Role-Based Access Control (RBAC) Module 620. Administrators can define roles, assign permissions, and control user access based on their responsibilities and organizational hierarchy. RBAC Module 620 ensures that only authorized users can access specific features and information, safeguarding data privacy, security, and compliance within the supply chain ecosystem.

In some embodiments, Customization Module 625 empowers users to personalize their dashboard and tailor the interface to their preferences and needs. Users can arrange widgets, charts, and data visualizations to prioritize the information most relevant to their specific roles and tasks. This module allows stakeholders to customize their view of the supply chain operations, providing a user-centric experience that enhances productivity and usability.

SPoG UI 600 can include Data Visualization Module 630, which enables stakeholders to analyze and interpret supply chain data through interactive dashboards, charts, graphs, and visual representations. Leveraging advanced visualization techniques, this module presents complex data in a clear and intuitive manner. Users can gain insights into key performance indicators (KPIs), trends, patterns, and anomalies, facilitating data-driven decision-making and strategic planning.

SPoG UI 600 can include Mobile and Cross-Platform Accessibility Module 635 to ensure accessibility across multiple devices and platforms. Stakeholders can access the interface from desktop computers, laptops, smartphones, and tablets, allowing them to stay connected and informed while on the go. This module optimizes the user experience for different screen sizes, resolutions, and operating systems, ensuring integrated access to real-time data and functionalities across various devices.

It should be understood that the operations shown in the exemplary methods are not exhaustive and that other operations can be performed as well before, after, or between any of the illustrated operations. In some embodiments of the present disclosure, the operations can be performed in a different order and/or vary.

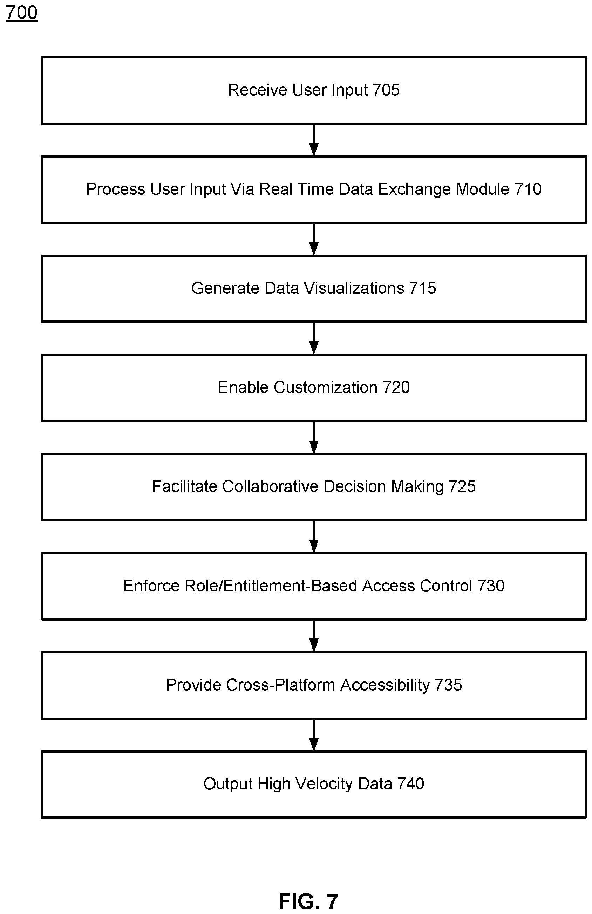

FIG. 7 is a flow diagram of a method 700 for performing comprehensive supply chain management operations using the SPoG UI, according to some embodiments of the present disclosure. In some embodiments, method 700 provides operational steps to streamline supply chain processes, enhance decision-making, and optimize operations within the supply chain ecosystem. In some embodiments, method 700 performs real-time data retrieval, visualization, customization, collaboration, access control, and cross-platform accessibility functionalities through the SPoG UI. Based on the disclosure herein, operations in method 700 can be performed in a different order and/or vary to suit specific implementation requirements.

At operation 705, a computing device receives user input through the SPoG UI, representing a wide range of requests and commands related to supply chain management. The user input encompasses actions such as selecting specific data visualizations, accessing different modules or functionalities, initiating workflows, configuring the interface, and performing data-driven analyses. This interactive input mechanism enables stakeholders to effectively engage with the SPoG UI and obtain relevant insights to support their decision-making processes.

At operation 710, the computing device processes the user input and interacts with the Real-Time Data Exchange Module, leveraging its integration capabilities with the RTDM module. This integration ensures efficient data retrieval and synchronization, allowing the computing device to access up-to-date and accurate information from diverse data sources within the supply chain ecosystem. By establishing a connection with the RTDM module and leveraging the real-time data exchange, the computing device ensures that the insights presented in the SPoG UI reflect the latest developments and provide a comprehensive view of the supply chain operations.

At operation 715, the computing device employs the Data Visualization Module to generate visually appealing and interactive representations of the retrieved supply chain data. This module utilizes advanced visualization techniques to create dynamic dashboards, charts, graphs, and other visual elements that effectively communicate key performance indicators, trends, patterns, anomalies, and correlations within the supply chain ecosystem. Through these visualizations, stakeholders can gain valuable insights, identify critical areas, and assess the overall health of their supply chain operations.

At operation 720, the computing device enables users to personalize their dashboards and tailor the SPoG UI interface according to their specific preferences and needs. The Customization Module empowers stakeholders to arrange widgets, charts, data visualizations, and other UI components to prioritize the information most relevant to their roles and responsibilities. This flexibility ensures a user-centric experience, allowing stakeholders to focus on critical data points and streamline their decision-making processes within the SPoG UI.

At operation 725, the computing device facilitates real-time collaboration and communication among stakeholders through the Collaborative Decision-Making Module. This module provides features that enable stakeholders to exchange information, share insights and recommendations, initiate workflows, and engage in discussions within the SPoG UI interface. By integrating with the RTDM module, the Collaborative Decision-Making Module ensures that stakeholders can collaborate effectively based on accurate and synchronized data, fostering a cohesive and agile supply chain ecosystem.

At operation 730, the computing device enforces secure access control mechanisms through the Role-Based Access Control (RBAC) Module integrated into the SPoG UI. This module enables administrators to define roles, assign permissions, and control user access based on their responsibilities and organizational hierarchy. By enforcing RBAC, the computing device safeguards data privacy, ensures confidentiality, and maintains regulatory compliance within the supply chain ecosystem. Authorized stakeholders can access specific features, functionalities, and information based on their assigned roles, minimizing the risk of unauthorized data access or misuse.

At operation 735, the computing device optimizes the SPoG UI for integrated accessibility across multiple devices and platforms through the Mobile and Cross-Platform Accessibility Module. This module ensures that stakeholders can access the SPoG UI interface from desktop computers, laptops, smartphones, and tablets, enabling them to stay connected, informed, and engaged with supply chain operations while on the go. The interface is optimized to provide a consistent and intuitive user experience across different screen sizes, resolutions, and operating systems, facilitating real-time data access and enhancing stakeholder productivity.

At operation 740, the computing device leverages the High-Velocity Data in Data-Rich Environments module to efficiently handle real-time data and maintain a visually clean interface. This module incorporates a unique configuration of the SPoG UI structure, responsive data visualizations, real-time data handling methods, adaptive information architecture, and optimization techniques. Operation 740 can include processing a large amount of dynamic supply chain data in a comprehensible, efficient, and visually appealing manner. The SPoG UI's grid-based layout system, powered by CSS^{®} Grid and Flexbox^{®} technologies, enables fluid adaptation of UI elements to available space and content, while HTML5, CSS3, and JavaScript (specifically React.js) manage the dynamic aspects of the interface.

In summary, the method 700 depicted in FIG. 7 outlines a comprehensive approach to supply chain management through the SPoG UI. By leveraging real-time data retrieval, visualization, customization, collaboration, access control, and cross-platform accessibility functionalities, stakeholders gain valuable insights into supply chain operations and can make informed decisions. The method facilitates efficient integration with the RTDM module, ensuring accurate and up-to-date data synchronization. Through personalized dashboards, interactive data visualizations, collaborative decision-making, secure access control, and cross-device accessibility, the SPoG UI empowers stakeholders to optimize their supply chain operations, enhance collaboration, and drive efficiency in the dynamic and complex supply chain ecosystem.

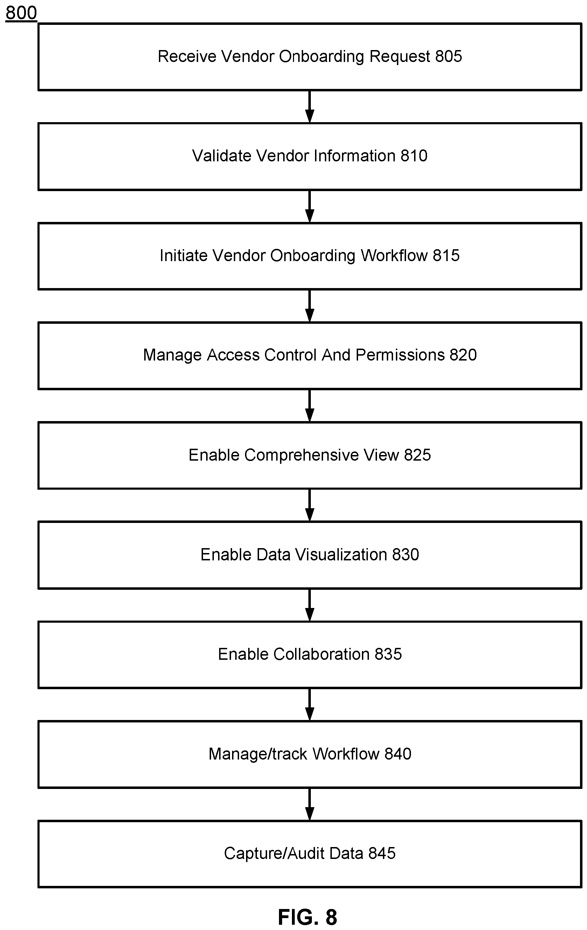

FIG. 8 is a flow diagram of a method 800 for vendor onboarding using the SPoG UI, according to some embodiments of the present disclosure. In some embodiments, method 800 outlines a streamlined and efficient process that leverages the capabilities of the SPoG UI to facilitate the onboarding of vendors into the supply chain ecosystem. By integrating real-time data, collaborative decision-making, and role-based access control functionalities, the SPoG UI enables stakeholders to effectively manage and optimize the vendor onboarding process. Based on the disclosure herein, operations in method 800 can be performed in a different order and/or vary to suit specific implementation requirements.

At operation 805, the process is initiated when a vendor expresses interest in joining the supply chain ecosystem. The computing device, utilizing the SPoG UI, receives the vendor's information and relevant details. This can include company profiles, contact information, product catalogs, certifications, and any other pertinent data required for the vendor onboarding process.

At operation 810, the computing device validates the vendor's information using integration capabilities with the Real-Time Data Exchange Module. By leveraging real-time data synchronization and access to external systems, the computing device ensures that the vendor's details are accurate and up to date. This validation step helps maintain data integrity, minimizes errors, and establishes a reliable foundation for the vendor onboarding process.

At operation 815, the computing device initiates the vendor onboarding workflow through the Collaborative Decision-Making Module. This module allows stakeholders involved in the onboarding process, such as procurement officers, legal teams, and vendor managers, to collaborate and make informed decisions based on the vendor's information. The SPoG UI facilitates efficient communication, file sharing, and workflow initiation, enabling stakeholders to collectively assess the vendor's suitability and efficiently progress through the onboarding steps.

At operation 820, the computing device employs the Role-Based Access Control (RBAC) Module to manage access control and permissions throughout the vendor onboarding process. The RBAC Module ensures that stakeholders only have access to the specific information and functionalities necessary for their roles. This control mechanism protects sensitive data, maintains privacy, and aligns with regulatory requirements. Authorized stakeholders can securely review and contribute to the vendor onboarding process, fostering a transparent and compliant environment.

At operation 825, the computing device provides stakeholders with a comprehensive view of the vendor onboarding process through the SPoG UI's Unified View (UV) Module. This module presents an intuitive and customizable dashboard-style layout, consolidating relevant information, milestones, and tasks associated with the vendor onboarding process. Stakeholders can monitor progress, track documentation requirements, and access real-time updates to ensure efficient and timely completion of the onboarding tasks.

At operation 830, the computing device enables stakeholders to interact with the SPoG UI's Data Visualization Module, which provides dynamic visualizations and analytics related to the vendor onboarding process. Through interactive charts, graphs, and reports, stakeholders can assess key performance indicators, identify bottlenecks, and gain insights into the overall efficiency of the vendor onboarding process. This data-driven approach empowers stakeholders to make informed decisions, allocate resources effectively, and optimize the onboarding workflow.

At operation 835, the computing device facilitates integrated collaboration among stakeholders involved in the vendor onboarding process through the Collaborative Decision-Making Module. This module enables real-time communication, document sharing, and workflow coordination, allowing stakeholders to streamline the onboarding process. By providing a centralized platform for discussion, feedback, and approvals, the SPoG UI promotes efficient collaboration and reduces delays in the vendor onboarding workflow.

At operation 840, the computing device ensures effective management and tracking of the vendor onboarding process using the SPoG UI's Workflow Management Module. This module enables stakeholders to define and manage the sequence of tasks, approvals, and reviews required for successful vendor onboarding. Workflow templates can be configured, allowing for standardization and repeatability in the onboarding process. Stakeholders can monitor the status of each task, track completion, and receive notifications to ensure timely progress.

At operation 845, the computing device captures and records the vendor onboarding activities within the SPoG UI's Audit Trail Module. This module maintains a detailed history of the onboarding process, including actions taken, documents reviewed, and decisions made. The audit trail enhances transparency, accountability, and compliance, providing stakeholders with a reliable record for future reference and potential audits.

At operation 850, the computing device concludes the vendor onboarding process within the SPoG UI. Once all necessary steps, reviews, and approvals are completed, the vendor is officially onboarded into the supply chain ecosystem. The SPoG UI can provide stakeholders with a summary of the onboarding process, allowing them to verify the completion of all requirements and initiate further actions, such as contract signing, product listing, and collaboration.

In conclusion, method 800 depicted in FIG. 8 outlines a streamlined and efficient vendor onboarding process using the SPoG UI. By leveraging real-time data integration, collaborative decision-making, role-based access control, comprehensive visualization, and workflow management functionalities, the SPoG UI empowers stakeholders to successfully onboard vendors into the supply chain ecosystem. This process ensures data accuracy, promotes transparency, enhances collaboration, and facilitates informed decision-making throughout the vendor onboarding workflow. The SPoG UI's intuitive interface, combined with its customizable features and notifications, streamlines the onboarding process, reduces manual effort, and optimizes vendor integration within the dynamic and complex supply chain landscape.

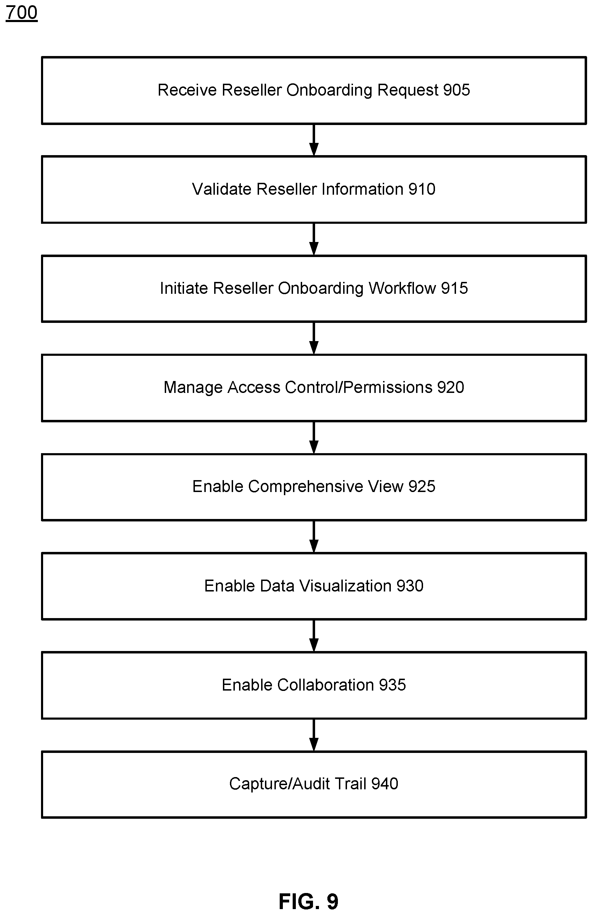

FIG. 9 is a flow diagram of a method 900 for reseller onboarding using the SPoG UI, according to some embodiments of the present disclosure. Method 900 outlines a streamlined and efficient process that leverages the capabilities of the SPoG UI to facilitate the onboarding of resellers into the supply chain ecosystem. By integrating real-time data, collaborative decision-making, and role-based access control functionalities, the SPoG UI enables stakeholders to effectively manage and optimize the reseller onboarding process. Based on the disclosure herein, operations in method 900 can be performed in a different order and/or vary to suit specific implementation requirements.

At operation 905, the process begins when a reseller expresses interest in joining the supply chain ecosystem. The computing device, utilizing the SPoG UI, receives the reseller's information and relevant details. This includes company profiles, contact information, business certifications, reseller agreements, and any other pertinent data required for the reseller onboarding process.

At operation 910, the computing device validates the reseller's information using integration capabilities with the Real-Time Data Exchange Module. By leveraging real-time data synchronization and access to external systems, the computing device ensures that the reseller's details are accurate and up to date. This validation step helps maintain data integrity, minimizes errors, and establishes a reliable foundation for the reseller onboarding process.

At operation 915, the computing device initiates the reseller onboarding workflow through the Collaborative Decision-Making Module. This module allows stakeholders involved in the onboarding process, such as sales representatives, legal teams, and account managers, to collaborate and make informed decisions based on the reseller's information. The SPoG UI facilitates integrated communication, file sharing, and workflow initiation, enabling stakeholders to collectively assess the reseller's suitability and efficiently progress through the onboarding steps.

At operation 920, the computing device employs the Role-Based Access Control (RBAC) Module to manage access control and permissions throughout the reseller onboarding process. The RBAC Module ensures that stakeholders only have access to the specific information and functionalities necessary for their roles. This control mechanism protects sensitive data, maintains privacy, and aligns with regulatory requirements. Authorized stakeholders can securely review and contribute to the reseller onboarding process, fostering a transparent and compliant environment.

At operation 925, the computing device provides stakeholders with a comprehensive view of the reseller onboarding process through the SPoG UI's Unified View (UV) Module. This module presents an intuitive and customizable dashboard-style layout, consolidating relevant information, milestones, and tasks associated with the reseller onboarding process. Stakeholders can monitor progress, track documentation requirements, and access real-time updates to ensure efficient and timely completion of the onboarding tasks.

At operation 930, the computing device enables stakeholders to interact with the SPoG UI's Data Visualization Module, which provides dynamic visualizations and analytics related to the reseller onboarding process. Through interactive charts, graphs, and reports, stakeholders can assess key performance indicators, identify bottlenecks, and gain insights into the overall efficiency of the onboarding process. This data-driven approach empowers stakeholders to make informed decisions, allocate resources effectively, and optimize the reseller onboarding workflow.

At operation 935, the computing device facilitates efficient collaboration among stakeholders involved in the reseller onboarding process through the Collaborative Decision-Making Module. This module enables real-time communication, document sharing, and workflow coordination, allowing stakeholders to streamline the onboarding process. By providing a centralized platform for discussion, feedback, and approvals, the SPoG UI promotes efficient collaboration and reduces delays in the reseller onboarding workflow.

At operation 940, the computing device records and maintains an audit trail of the reseller onboarding activities within the SPoG UI's Audit Trail Module. This module captures detailed information about actions taken, decisions made, and documents reviewed during the onboarding process. The audit trail enhances transparency, accountability, and compliance, serving as a valuable reference for future audits, reviews, and assessments.

At operation 945, the computing device concludes the reseller onboarding process within the SPoG UI. Once all necessary tasks, reviews, and approvals are completed, the reseller is officially onboarded into the supply chain ecosystem. The SPoG UI provides stakeholders with a summary of the onboarding process, ensuring that all requirements are met and facilitating further actions, such as contract signing, product listing, and collaboration with the reseller.

In conclusion, method 900 depicted in FIG. 9 highlights the streamlined and efficient reseller onboarding process using the SPoG UI. By leveraging real-time data integration, collaborative decision-making, role-based access control, comprehensive visualization, and audit trail functionalities, the SPoG UI empowers stakeholders to successfully onboard resellers into the supply chain ecosystem. The intuitive interface, customizable features, and robust collaboration capabilities of the SPoG UI streamline the onboarding process, enhance transparency, and foster efficient communication among stakeholders. The SPoG UI's data visualization capabilities facilitate data-driven decision-making, while the audit trail ensures compliance and provides a reliable record of the onboarding activities. Through the effective utilization of the SPoG UI, the reseller onboarding process becomes a well-orchestrated workflow, optimizing the integration of resellers and promoting business success within the dynamic supply chain environment.

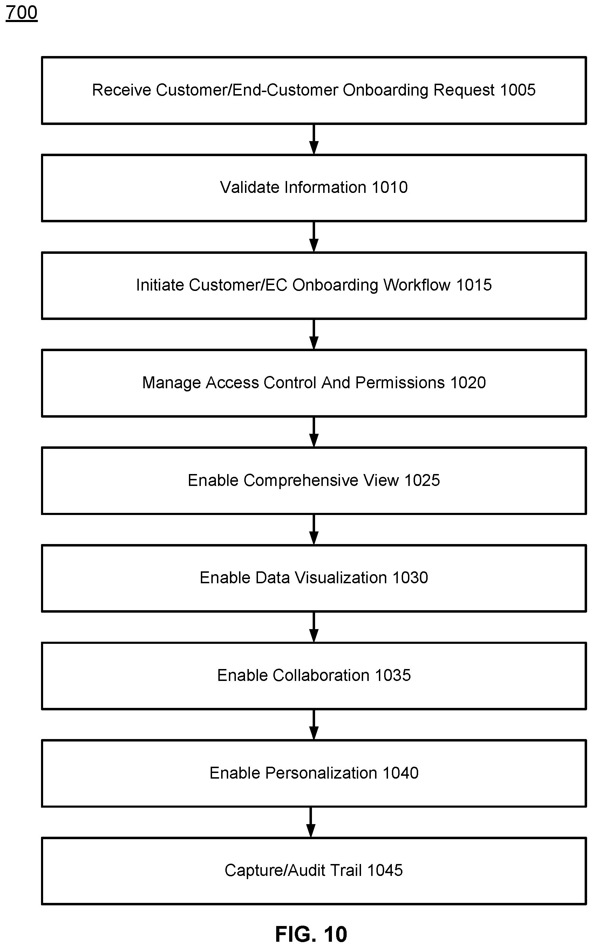

FIG. 10 is a flow diagram of a method 1000 for customer and end customer onboarding using the SPoG UI, according to some embodiments of the present disclosure. Method 1000 outlines a comprehensive and user-centric approach to efficiently onboard customers and end customers into the supply chain ecosystem. By leveraging the capabilities of the SPoG UI, including real-time data integration, collaborative decision-making, and personalized user experiences, stakeholders can successfully onboard and engage customers, providing them with an efficient and tailored onboarding experience. Based on the disclosure herein, operations in method 1000 can be performed in a different order and/or vary to suit specific implementation requirements.

At operation 1005, the process begins when a potential customer or end customer expresses interest in joining the supply chain ecosystem. The computing device, utilizing the SPoG UI, captures the customer's or end customer's information, preferences, and requirements necessary for the onboarding process. This includes contact details, business profiles, industry-specific preferences, and any other relevant data.

At operation 1010, the computing device validates the customer's or end customer's information using real-time data integration capabilities with external systems. By synchronizing and accessing data from various sources, such as customer relationship management (CRM) systems or other enterprise-wide solutions, the computing device ensures the accuracy and completeness of the customer's or end customer's information. This validation step helps establish a reliable foundation for the onboarding process and enhances data integrity.

At operation 1015, the computing device initiates the customer or end customer onboarding workflow through the Collaborative Decision-Making Module. This module facilitates integrated communication and collaboration among stakeholders involved in the onboarding process, such as sales representatives, account managers, and customer support teams. The SPoG UI provides a centralized platform for stakeholders to collectively assess customer requirements, define personalized onboarding journeys, and make informed decisions throughout the onboarding process.

At operation 1020, the computing device utilizes the Role-Based Access Control (RBAC) Module to manage access control and permissions during the onboarding process. The RBAC Module ensures that stakeholders have appropriate access to customer or end customer data based on their roles and responsibilities. This control mechanism protects sensitive information, maintains data privacy, and aligns with regulatory requirements. Authorized stakeholders can securely review, update, and track the onboarding progress, fostering a transparent and compliant onboarding environment.

At operation 1025, the computing device leverages the SPoG UI's Unified View (UV) Module to provide stakeholders with a comprehensive and customizable dashboard-style layout of the customer or end customer onboarding process. This module consolidates relevant information, tasks, and milestones associated with the onboarding journey, offering stakeholders a holistic view of the onboarding progress. Stakeholders can monitor the status, review documentation, and access real-time updates to ensure an efficient and integrated onboarding experience.

At operation 1030, the computing device utilizes the SPoG UI's Data Visualization Module to present dynamic visualizations and analytics related to the onboarding process. Through interactive charts, graphs, and reports, stakeholders gain insights into key onboarding metrics, customer engagement levels, and potential bottlenecks. The data-driven approach empowers stakeholders to make informed decisions, optimize onboarding strategies, and personalize the onboarding experience for each customer or end customer.

At operation 1035, the computing device enables stakeholders to interact with the Collaborative Decision-Making Module to facilitate integrated collaboration during the onboarding process. Stakeholders can share documents, initiate workflows, and exchange information in real-time. The SPoG UI fosters effective communication, reducing delays and ensuring alignment among stakeholders involved in customer or end customer onboarding.

At operation 1040, the computing device employs the Customization Module to allow stakeholders to personalize the onboarding experience for each customer or end customer. Stakeholders can tailor the interface, workflows, and communications to align with the customer's or end customer's preferences, industry-specific requirements, and strategic objectives. The customization capability enhances customer satisfaction and engagement during the onboarding journey.

At operation 1045, the computing device utilizes the Audit Trail Module within the SPoG UI to maintain a detailed record of the customer or end customer onboarding activities. This module captures information about actions taken, decisions made, and documents reviewed throughout the onboarding process. The audit trail enhances transparency, accountability, and compliance, serving as a valuable reference for future audits, reviews, and assessments.

At operation 1050, the computing device concludes the customer or end customer onboarding process within the SPoG UI. Once all necessary tasks, reviews, and approvals are completed, the customer or end customer is officially onboarded into the supply chain ecosystem. The SPoG UIprovides stakeholders with a summary of the onboarding process, ensuring that all requirements are met and facilitating further actions, such as account activation, provisioning of services, or personalized customer engagement.

In conclusion, method 1000 depicted in FIG. 10 illustrates the customer and end customer onboarding process facilitated by the SPoG UI. By leveraging real-time data integration, collaborative decision-making, role-based access control, comprehensive visualization, customization, and audit trail functionalities, the SPoG UI empowers stakeholders to successfully onboard customers and end customers into the supply chain ecosystem. The intuitive interface, personalized features, and robust collaboration capabilities of the SPoG UI streamline the onboarding process, enhance transparency, and foster efficient communication among stakeholders. The SPoG UI's data visualization capabilities facilitate data-driven decision-making, while the customization and audit trail modules ensure a tailored and compliant onboarding experience. Through the effective utilization of the SPoG UI, the customer and end customer onboarding processes become integrated workflows, optimizing the integration of customers and end customers and promoting business success within the dynamic supply chain environment.

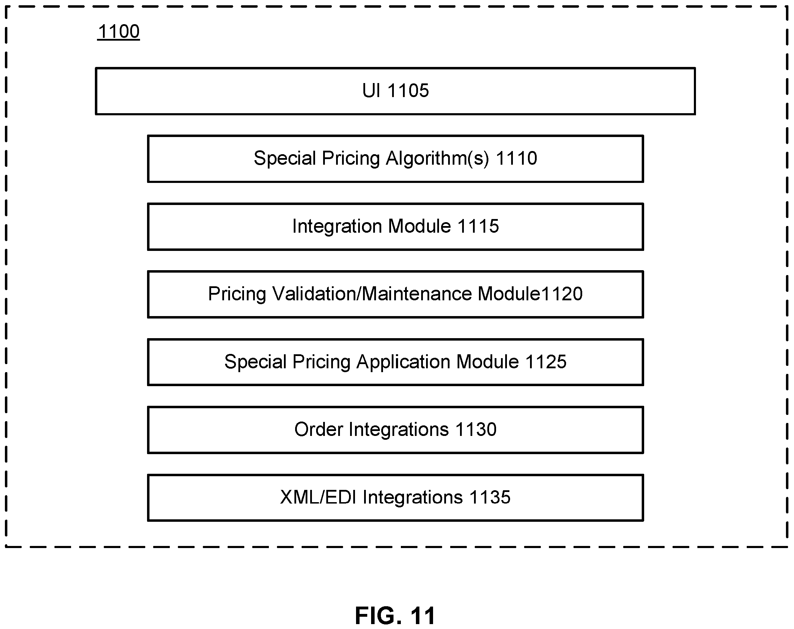

FIG. 11 depicts the system architecture of system 1100, an advanced solution designed to automate the near real-time special pricing calculation and application process. This system incorporates various components that work synergistically to ensure precise pricing, minimize manual effort, and reduce potential errors, ultimately streamlining the pricing workflow and enhancing overall sales effectiveness.

System 1100 includes the Special Pricing Algorithms 1110, which are specifically designed to handle a wide range of variables essential for accurate pricing determination. These variables include manufacturer details, specific products or a combination of products, product categories, solution types, time of year or specific dates, product authorizations, end users, and solution providers. By leveraging these variables, the Special Pricing Algorithms 1110 can perform real-time calculations based on historical buying patterns or predefined rules established by pricing analysts. This dynamic approach enables the system to respond swiftly to changing market conditions and meet specific customer requirements.

In some embodiments, these algorithms are specifically designed to handle a wide range of variables essential for accurate pricing determination, including manufacturer details, specific products or combinations, product categories, solution types, time of year or specific dates, product authorizations, end users, and solution providers. By incorporating insights from a RTDM module having CDC (e.g., RTDM 500), the Special Pricing Algorithms 1110 can be configured to perform real-time calculations based on historical buying patterns or predefined rules established by pricing analysts. This dynamic approach enables the system to respond swiftly to changing market conditions and meet specific customer requirements.

To ensure efficient retrieval of pricing and availability information, System 1100 utilizes a caching mechanism 1140. In some embodiments, the APIgee Cache serves as the caching mechanism 1140, storing Everest-enabled vendor codes. This cache facilitates quick access to vendor-specific data required for accurate pricing calculations. By leveraging the cached information, the system ensures that the most up-to-date pricing and availability details are available for computation, resulting in precise pricing recommendations. In some embodiments, by leveraging the cached information and harmonized data from an RTDM module, the system ensures the most up-to-date pricing and availability details are available for computation, resulting in precise pricing recommendations.

System 1100 incorporates an integration module 1115, which enables data and document exchange with external partners. In this embodiment, the integration module utilizes SEEBURGER integration technology to adhere to industry-standard data exchange protocols, ensuring smooth collaboration between different stakeholders. Through the SEEBURGER Integration 1115, the system can securely and efficiently transmit pricing-related information and documents to external entities, streamlining the overall pricing workflow.

To maintain data integrity and accuracy, System 1100 includes a Pricing Validation and Maintenance module 1120. This module applies intelligent validation rules and algorithms to verify the correctness of pricing programs. By validating the pricing data against predefined business rules, the system minimizes the risk of errors and discrepancies. The Pricing Validation and Maintenance module 1120 ensures that the pricing programs remain accurate and up-to-date, enhancing overall pricing reliability.

System 1100 incorporates the Special Pricing Creation and Application module 1125, which automates the creation and application of special pricing in near real-time. This module retrieves the Special Pricing Algorithms 1110 and validated pricing data from the Pricing Validation and Maintenance module 1120. It ensures that the correct pricing and associated conditions are accurately applied to individual or multiple orders. By automating this process, the system reduces manual effort and eliminates potential delays in the sales process, resulting in improved efficiency and customer satisfaction.

System 1100 interacts with the order processing flow through integrations with the V7 Create Order API Async, V6 Create Order API, and Order Entry PCG API 1130. These integrations facilitate transfer of pricing information into the order systems, ensuring accurate and timely application of special pricing to the order stream. This integration streamlines the fulfillment process and guarantees that customers receive the correct pricing for their orders.

To enable efficient data exchange between the SEEBURGER system and the Order Entry systems, System 1100 incorporates XML and EDI integration 1135. This integration ensures the smooth transmission of pricing-related data, order details, and other relevant information between different systems involved in the order fulfillment process. The XML and EDI integration 1135 ensures accurate, secure, and industry-standard-compliant data exchange.

By combining these components and their interactions, System 1100 automates the near real-time special pricing calculation and application process. It leverages intelligent algorithms, caching mechanisms, data exchange, and integration with order systems to ensure accurate pricing, validate pricing programs, and efficiently apply pricing. The automation provided by System 1100 reduces manual effort, minimizes errors, and enhances overall sales effectiveness and customer satisfaction.

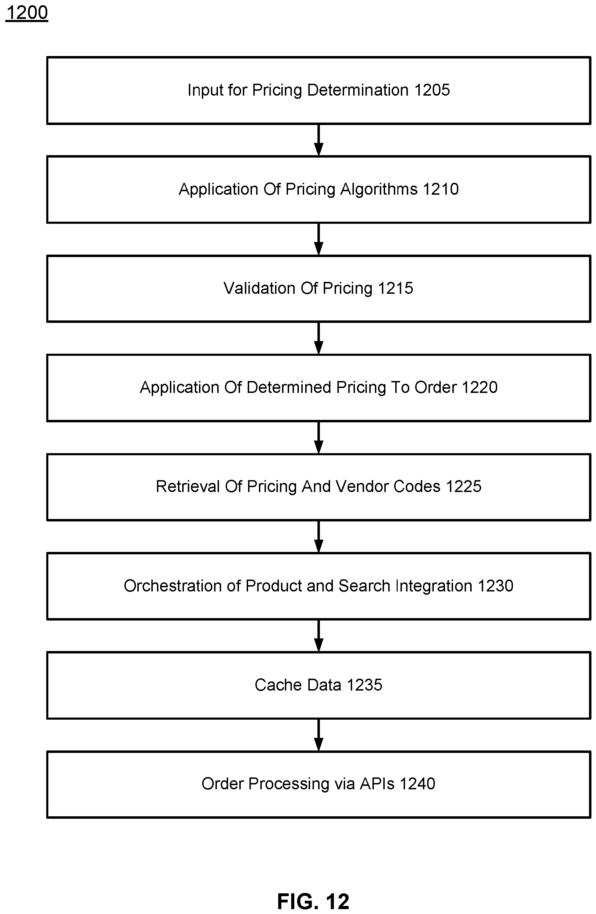

FIG. 12 depicts the detailed process flow for the special pricing functionality, a solution that addresses the challenges associated with determining, creating, and applying correct pricing in the industry. By leveraging advanced algorithms and intelligent rules, the system significantly reduces the time, effort, and potential errors involved in the pricing process, ultimately streamlining operations and enhancing the customer experience.

At operation 1205, the system initiates the process by receiving various inputs that are crucial for pricing determination. These inputs encompass a range of factors that influence the pricing decision, including manufacturer details, specific product or products, product categories, solution types, time of year or specific dates, product authorizations, end users of the solution, and the solution provider. Each input provides valuable context and contributes to the overall pricing calculation.

The system gathers this information from multiple sources, such as user inputs through the platform or APIs. These inputs serve as the foundation for the subsequent steps in the special pricing process. The received data is carefully analyzed and organized to ensure its relevance and accuracy.

At operation 1210 the system applies Special Pricing Calculation Algorithms. Once the inputs are received and validated, the system proceeds to operation 1210, where it applies special pricing calculation algorithms. These algorithms are designed to consider the specific inputs received earlier and perform complex calculations to determine the correct pricing for the given scenario.

The special pricing calculation algorithms can be based on intelligent rules and historical buying patterns. These rules define the pricing models and criteria for different scenarios. By incorporating these rules into the algorithms, the system can effectively calculate the most accurate and appropriate pricing for each unique combination of inputs.

The algorithms can take into account factors such as manufacturer preferences, product categories, historical sales data, and any other relevant variables. This comprehensive approach ensures that the calculated pricing aligns with the specific requirements and business rules defined by the organization.

At operation 1215, calculated pricing is validated using Master Data. After the special pricing calculation algorithms have determined the pricing for a particular scenario, the system proceeds to operation 1215, which involves validating the calculated pricing using master data.

Master data refers to the authoritative and reliable data that serves as a reference for various processes within the system. In the context of special pricing, master data includes information such as pricing rules, discount structures, vendor agreements, and other relevant data points.

During this step, the system cross-references the calculated pricing with the master data elements to ensure its accuracy and compliance with the predefined rules and criteria. The validation process involves checking for any discrepancies or exceptions that may require further review or adjustments.

By validating the calculated pricing against the master data, the system mitigates the risk of pricing errors and ensures that the applied pricing aligns with the organization's pricing policies and agreements.

With the calculated pricing validated and confirmed, the system moves on to operation 1220, which can include applying the determined pricing and associated conditions to the quote or order.

During this step, the system integrates with various modules and systems to facilitate the application of pricing. It ensures that the determined pricing, along with any applicable discounts, promotions, or special conditions, is accurately applied to the quote or order.

The application of pricing and conditions involves updating the relevant data fields and systems to reflect the correct pricing information. This step ensures that the pricing calculations are translated into actionable terms and are ready for further processing and fulfillment.

The system considers any specific requirements, contractual obligations, or business rules associated with the pricing and conditions. By applying them accurately, the system enables the generation of accurate quotes and orders that align with the customer's expectations and the organization's pricing strategies.

At operation 1225, the system can include retrieving pricing and availability vendor codes to complete the special pricing process. These codes play a vital role in determining the pricing for different vendors and their respective products.

The system interacts with the Price and Availability (P&A) module, which acts as a centralized source of information for pricing and availability data. The P&A module retrieves the pricing and availability vendor codes from the platform, which contain the necessary details to determine the pricing for Everest-enabled vendor products.

Once the pricing and availability vendor codes are obtained, the system utilizes them to generate the correct pricing for these specific products. The pricing information is then forwarded to the appropriate systems, such as the Global Price Engine (GPE) or Global Data System (GDS), to ensure accurate pricing representation for these products. For non-Everest enabled vendor products, the pricing information is directly sent to Impulse, the system's fulfillment module.

This step ensures that the special pricing process considers the unique pricing structures associated with different vendors and products. By retrieving and utilizing the pricing and availability vendor codes, the system ensures the accuracy and consistency of pricing information throughout the system.

At operation 1230, the system can include triggering a orchestration of an integration to facilitate product search (for example, a SeeBurger integration). The orchestration serves as a mechanism to retrieve relevant product information based on specific search criteria.

In a non-limiting example, when a product search request is initiated, the system communicates with SeeBurger, which acts as an EDI transformation tool. SeeBurger is responsible for orchestrating the retrieval of data from various sources, including the GPE or GDS (possibly leveraging Elastic) to fetch the necessary product information.

The orchestration process involves sending the search criteria to SeeBurger, which then interacts with the appropriate modules or systems to gather the requested data. This ensures that the system obtains accurate and up-to-date product information for the subsequent steps in the special pricing process.

In operation 1235, the system can utilize the APIgee cache to store and access data required for the special pricing process. The APIgee cache serves as a storage mechanism that enables efficient and quick retrieval of necessary information during pricing calculations and order processing.

The APIgee cache acts as a central repository where relevant data, such as platform orders and the SeeBurger orchestration output, is stored. This caching mechanism ensures that frequently accessed data is readily available, reducing the need for repetitive data retrieval from external systems.

By utilizing the APIgee cache, the system optimizes performance and response times, as data can be retrieved from the cache instead of relying solely on real-time data fetching from various sources. This caching approach significantly enhances the overall efficiency of the special pricing process and improves the system's responsiveness.

At operation 1240, the system processes orders using the V7 Create Order API Async and V6 Create Order API. These APIs play a pivotal role in enabling the creation and management of orders within the system. The V7 Create Order API Async and V6 Create Order API provide the necessary interfaces for receiving order-related inputs, whether from platform orders or through API integrations. These APIs ensure a flow of order data into the system for further processing.

When an order is received, the system leverages these APIs to generate the corresponding order objects within the system. The APIs handle the necessary validations, data transformations, and system interactions required to create a comprehensive order representation.

The asynchronous nature of the V7 Create Order API allows for parallel processing of multiple orders, enhancing the system's scalability and performance. This asynchronous capability ensures that order creation and processing can occur concurrently, reducing potential bottlenecks and improving overall efficiency. Once the orders have been processed and created within the system, operation 1240 can also include forwarding the processed orders to Impulse. This step ensures that the orders are transferred to Impulse for further processing and fulfillment.

To facilitate this transfer, the system utilizes XML and EDI submissions via the SeeBurger integration. These submissions encapsulate the necessary order data, including customer details, product information, pricing, and any additional order-specific requirements.

The integration between the system and Impulse enables the smooth handover of order data, ensuring that the processed orders are accurately reflected in Impulse's systems. This integration plays a crucial role in orchestrating the fulfillment process, allowing Impulse to proceed with order handling, inventory management, shipping, and other related operations.

By forwarding the processed orders to Impulse, the system ensures a end-to-end workflow, where the order data flows from initial processing through various stages to the final fulfillment phase.

In some embodiments, SeeBurger serves as a vital tool for converting XML and EDI data into the appropriate formats, allowing for interoperability between different components. The transformed EDI data is then transmitted to Impulse, while the XML data is transmitted to the Order Entry PCG API. These operations ensure the accurate capture, processing, and management of pricing and order information, contributing to the overall efficiency and effectiveness of the special pricing process.

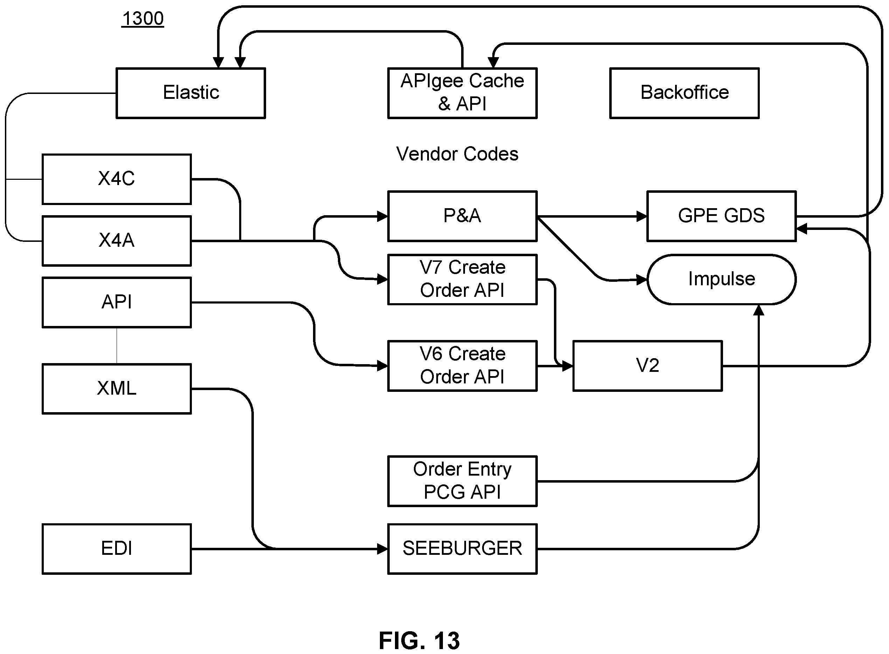

FIG. 13 represents the system 1300, which can be an embodiment of FIG. 11, and comprises an advanced automated framework designed to optimize the creation and application of special pricing. As described above, the system in operation 1205, integrates the Special Pricing Creation and Application module 1125. This integration facilitates near real-time retrieval of special pricing algorithms and validated pricing data, leading to a streamlined sales process with significantly reduced manual effort.

Interacting with the order processing flow through the V7 Create Order API Async, V6 Create Order API, and Order Entry PCG API 1130 in operation 1210, the system enables the transfer of pricing information into the order systems. This ensures the accurate and timely application of special pricing.

System 1300 incorporates an XML and EDI, as described above, to provide the exchange of pricing-related data and order details between various systems, complying with industry standards while maintaining data accuracy and security. System 1300 commences the pricing process by gathering diverse inputs crucial for pricing determination. Subsequently, system 1300 applies special pricing calculation algorithms. These algorithms use intelligent rules and historical buying patterns to arrive at the most accurate pricing for the given scenario.

Once the pricing is calculated, System 1300 validates the calculated pricing against authoritative and reliable master data, and applies the validated pricing and associated conditions to the quote or order, integrating with various modules and systems to ensure accuracy.

System 1300 retrieves pricing and availability vendor codes for generating the correct pricing for specific products. System 1300 triggers an orchestration of an integration to facilitate product search, retrieving relevant product information based on specific search criteria. System 1300 employs the APIgee cache for efficient storage and access of data during the pricing process. System 1300 utilizes the V7 Create Order API Async and V6 Create Order API for order creation and management. Once orders are processed, the system forwards them to the Impulse system for further processing and fulfillment, using XML and EDI submissions.

System 1300 thereby performs dedicated processes to generate real-time or near real-time calculation and application of special pricing. System 1300 achieves advantages in enhancing sales efficiency, minimized errors, and improved customer satisfaction.

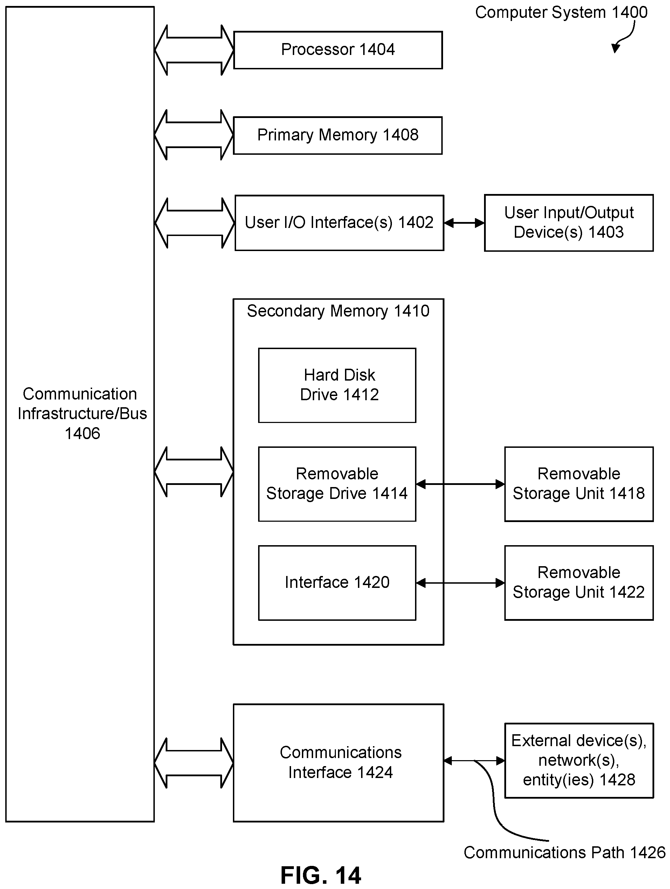

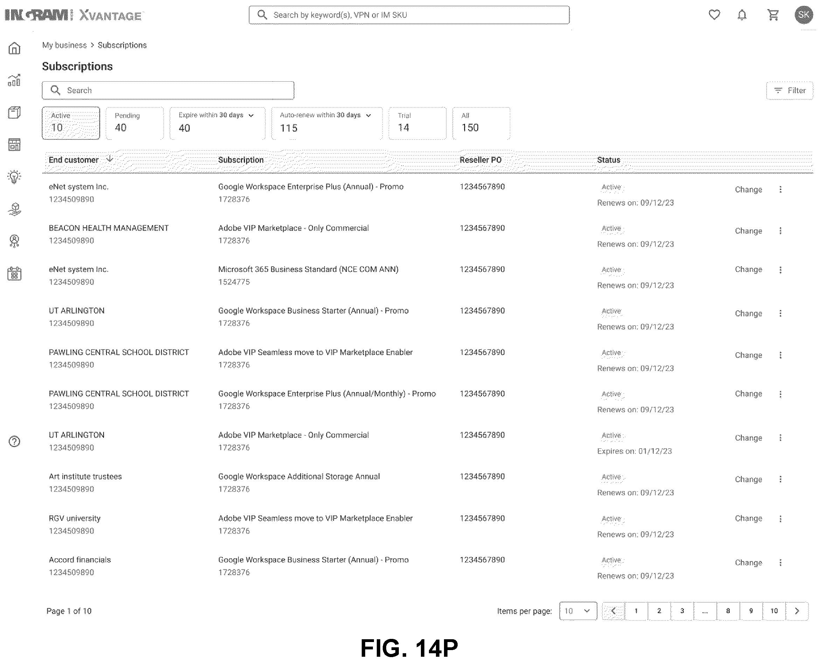

FIG. 14 is a block diagram of example components of device 1400. One or more computer systems 1400 may be used, for example, to implement any of the embodiments discussed herein, as well as combinations and sub-combinations thereof. Computer system 1400 may include one or more processors (also called central processing units, or CPUs), such as a processor 1404. Processor 1404 may be connected to a communication infrastructure or bus 1406.

Computer system 1400 may also include user input/output device(s) 1403, such as monitors, keyboards, pointing devices, etc., which may communicate with communication infrastructure 1406 through user input/output interface(s) 1402.

One or more processors 1404 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1400 may also include a main or primary memory 1408, such as random access memory (RAM). Main memory 1408 may include one or more levels of cache. Main memory 1408 may have stored therein control logic (i.e., computer software) and/or data.

Computer system 1400 may also include one or more secondary storage devices or memory 1410. Secondary memory 1410 may include, for example, a hard disk drive 1412 and/or a removable storage device or drive 1414.

Removable storage drive 1414 may interact with a removable storage unit 1418. Removable storage unit 1418 may include a computer-usable or readable storage device having stored thereon computer software (control logic) and/or data. Removable storage unit 1418 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1414 may read from and/or write to removable storage unit 1418.

Secondary memory 1410 may include other means, devices, components, instrumentalities or other approaches for allowing computer programs and/or other instructions and/or data to be accessed by computer system 1400. Such means, devices, components, instrumentalities or other approaches may include, for example, a removable storage unit 1422 and an interface 1420. Examples of the removable storage unit 1422 and the interface 1420 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1400 may further include a communication or network interface 1424. Communication interface 1424 may enable computer system 1400 to communicate and interact with any combination of external devices, external networks, external entities, etc. (individually and collectively referenced by reference number 1428). For example, communication interface 1424 may allow computer system 1400 to communicate with external or remote devices 1428 over communications path 1426, which may be wired and/or wireless (or a combination thereof), and which may include any combination of LANs, WANs, the Internet, etc. Control logic and/or data may be transmitted to and from computer system 1400 via communication path 1426.

Computer system 1400 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1400 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1400 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1400, main memory 1408, secondary memory 1410, and removable storage units 1418 and 1422, as well as tangible articles of manufacture embodying any combination of the foregoing. Such control logic, when executed by one or more data processing devices (such as computer system 1400), may cause such data processing devices to operate as described herein.

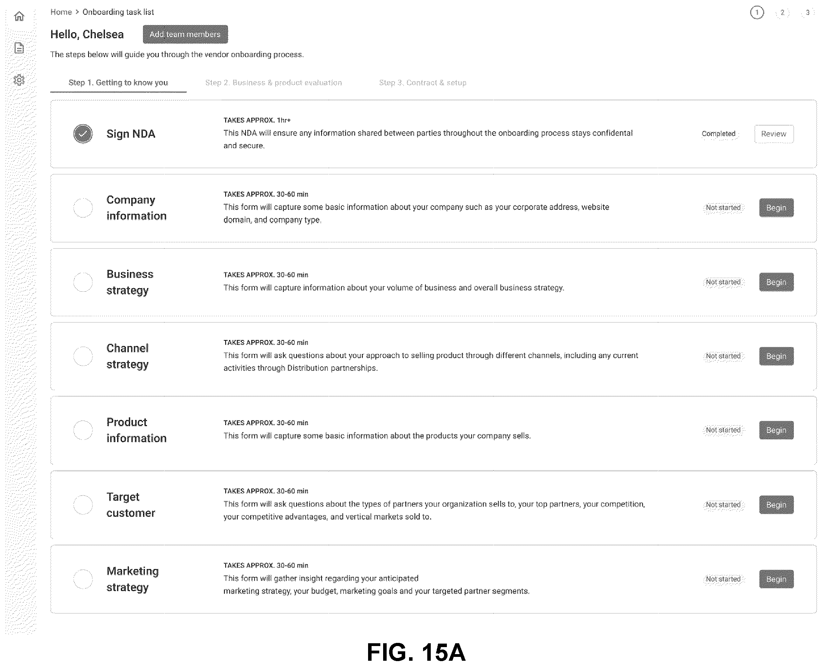

FIGS. 15A to 15Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:

FIG. 15A depicts a Vendor Onboarding Initiation screen that represents the initial step of the vendor onboarding process. It provides a form or interface where vendors can express their interest in joining the supply chain ecosystem. Vendors can enter their basic information, such as company details, contact information, and product catalogs.

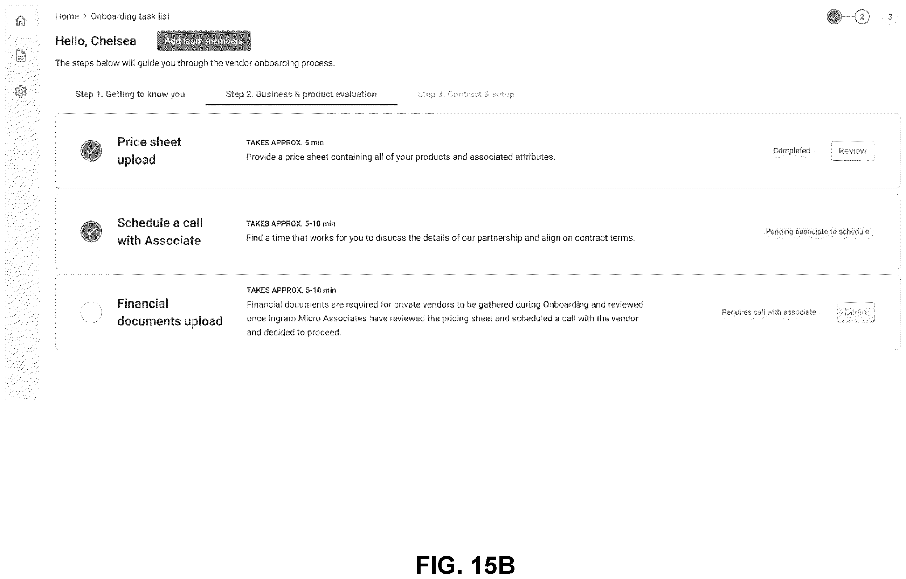

FIG. 15B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

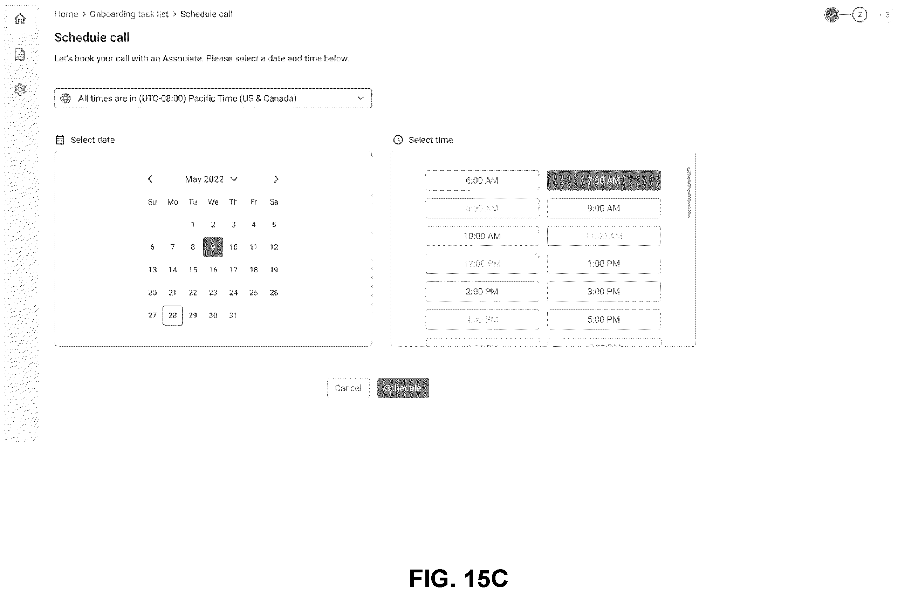

FIG. 15C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

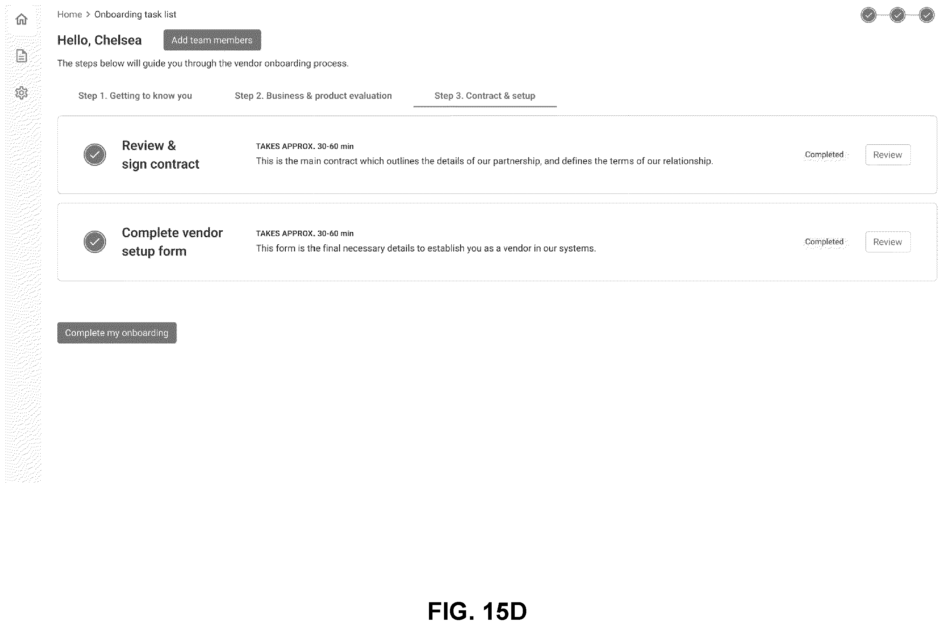

FIG. 15D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

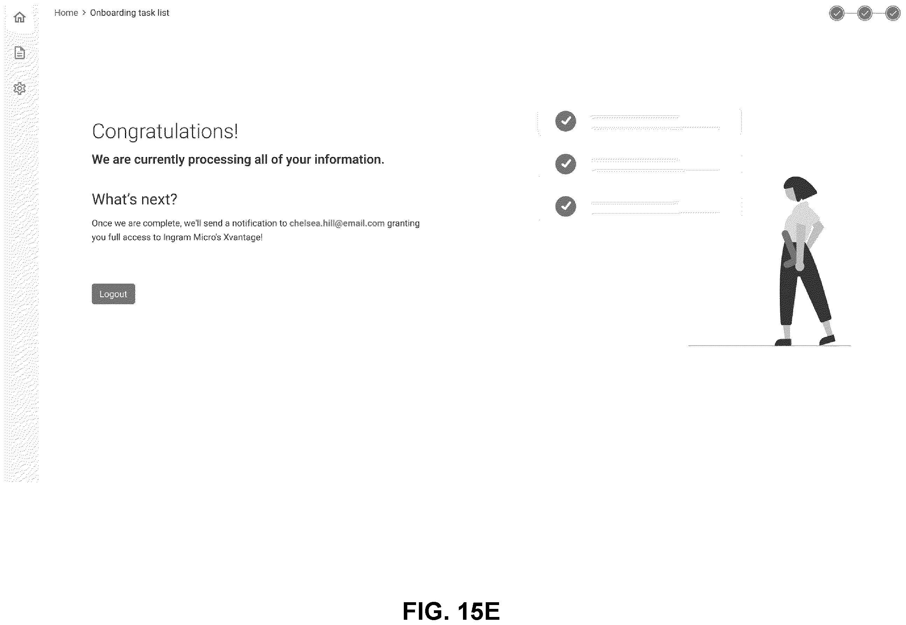

FIG. 15E depicts a Vendor Onboarding Completion Screen that confirms the successful completion of the vendor onboarding process. It may display a congratulatory message or summary of the completed tasks, indicating that the vendor is now officially onboarded into the supply chain ecosystem.

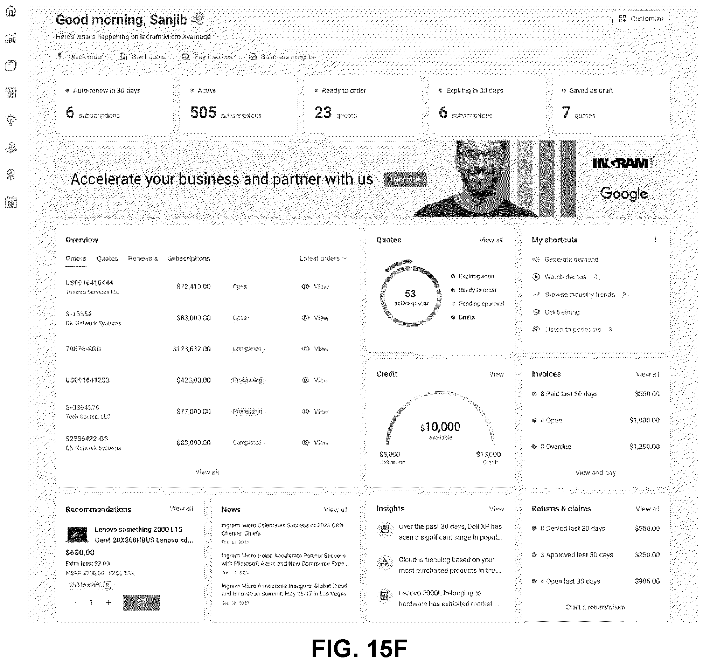

FIG. 15F depicts a Partner Dashboard that offers partners or stakeholders a centralized view of relevant information and metrics related to their partnership with the supply chain ecosystem. It provides an overview of performance indicators, key data points, and actionable insights to facilitate effective collaboration and decision-making.

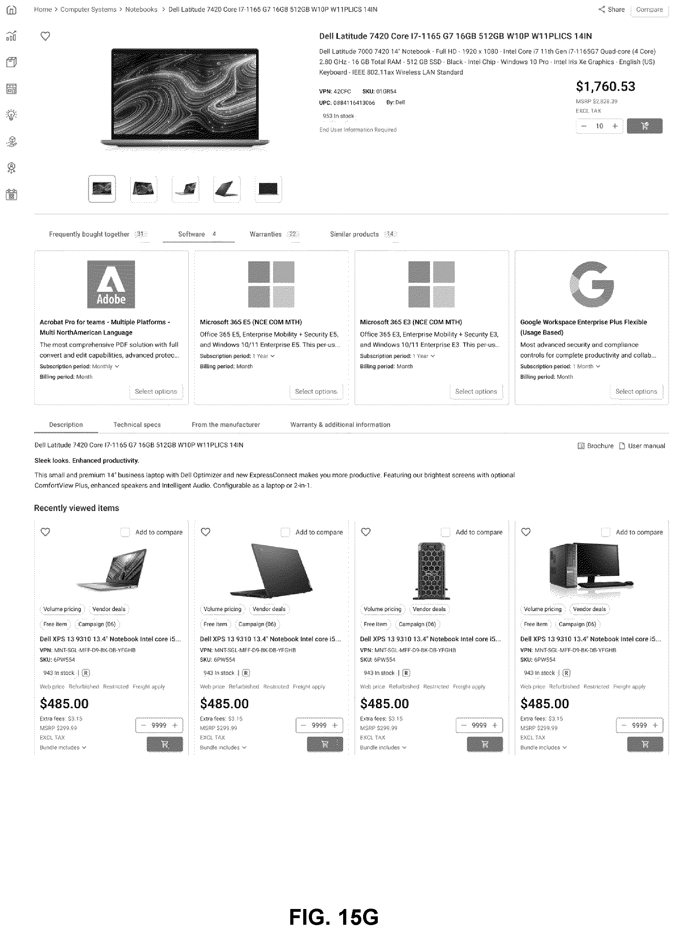

FIG. 15G depicts a Customer Product Cart that represents the customer's product cart, where they can add items they wish to purchase. It displays a list of selected products, quantities, prices, and other relevant details. Customers can review and modify their cart contents before proceeding to the checkout process.

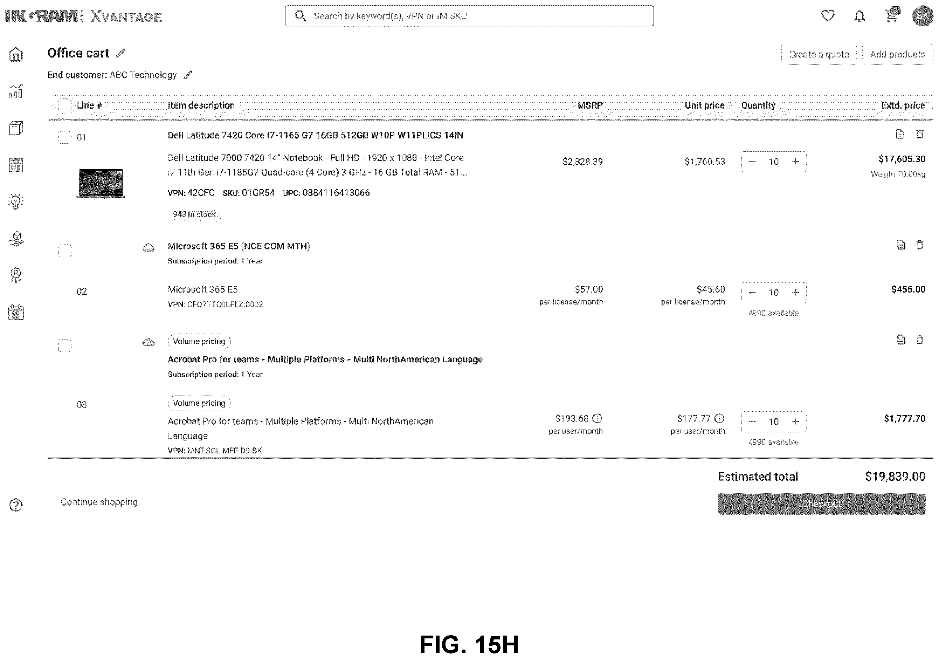

FIG. 15H depicts a Customer Subscription Cart that allows customers to manage their subscription-based purchases. It displays the selected subscription plans, pricing, and duration. Customers can review and modify their subscription details before finalizing their choices.

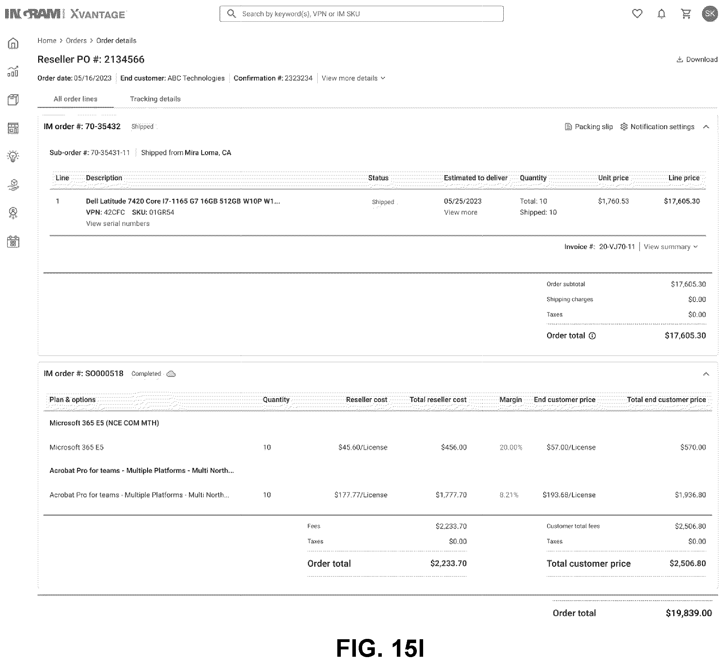

FIG. 15I depicts a Customer Order Summary that provides a summary of the customer's order, including details such as the products or subscriptions purchased, quantities, pricing, and any applied discounts or promotions. It allows customers to review their order before confirming the purchase.

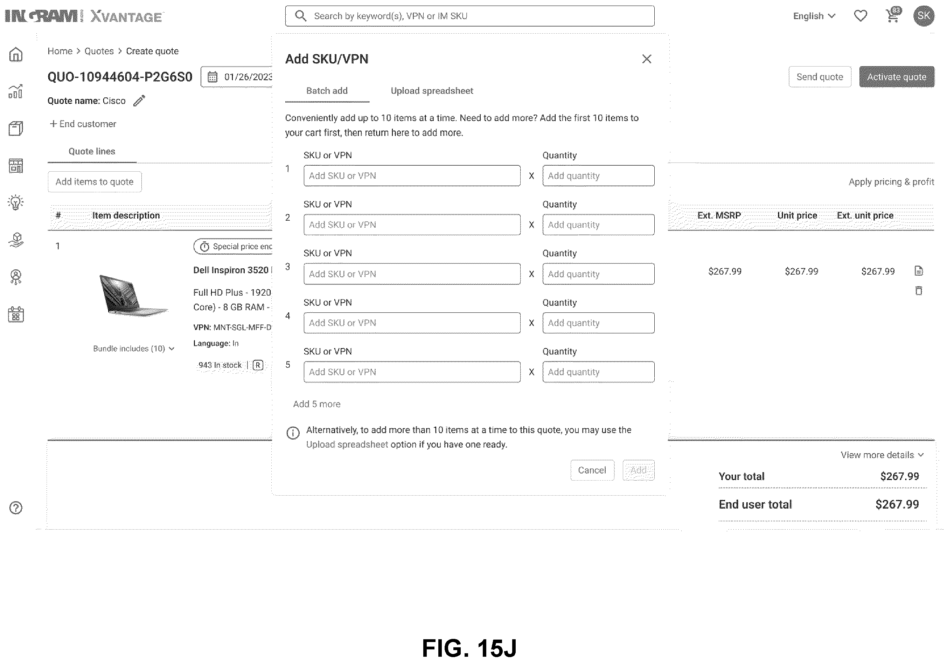

FIG. 15J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

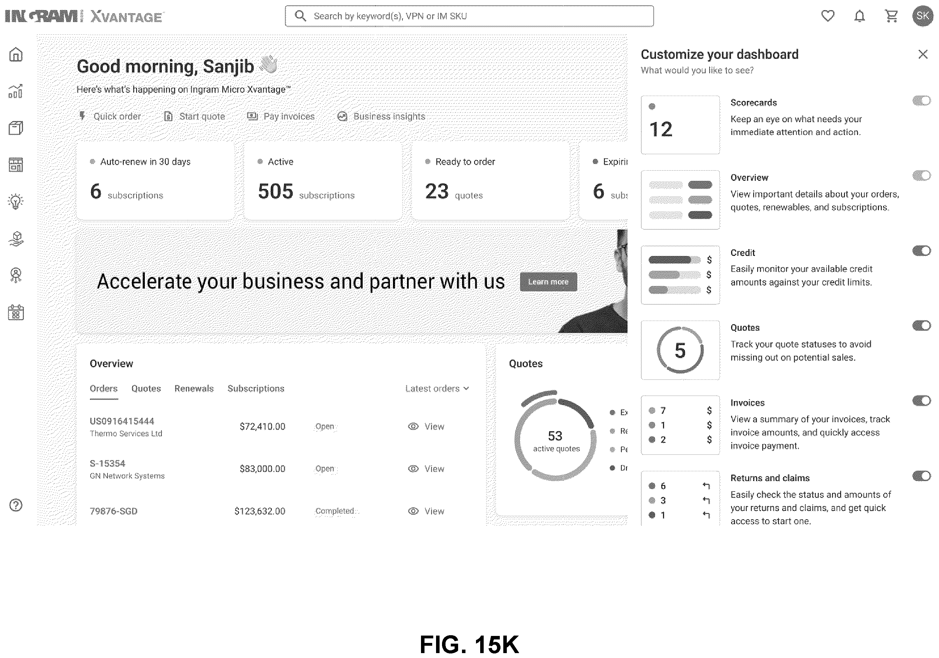

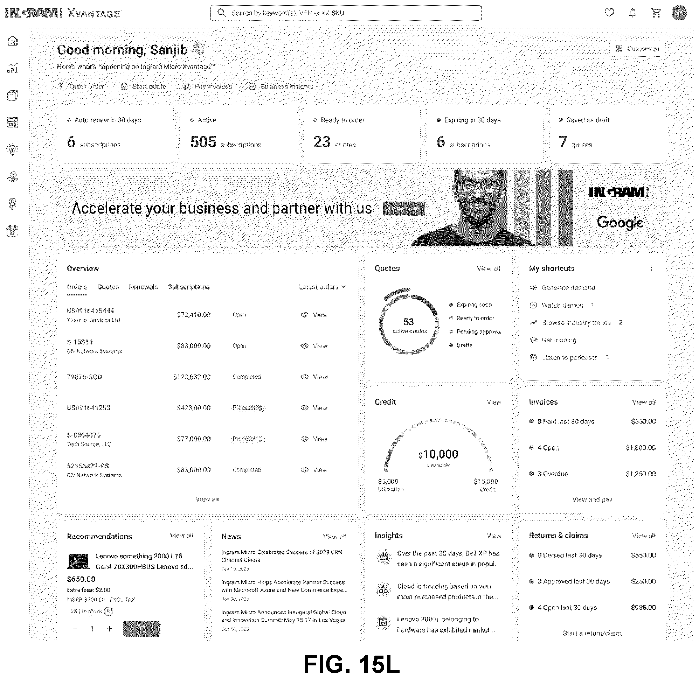

FIGS. 15K and 15L depicts Dashboard Order Summary to display summarized information about orders placed within the supply chain ecosystem. They present key order details, such as order number, customer name, product or subscription information, quantity, and order status. The dashboard provides an overview of order activity, enabling stakeholders to track and manage orders efficiently.

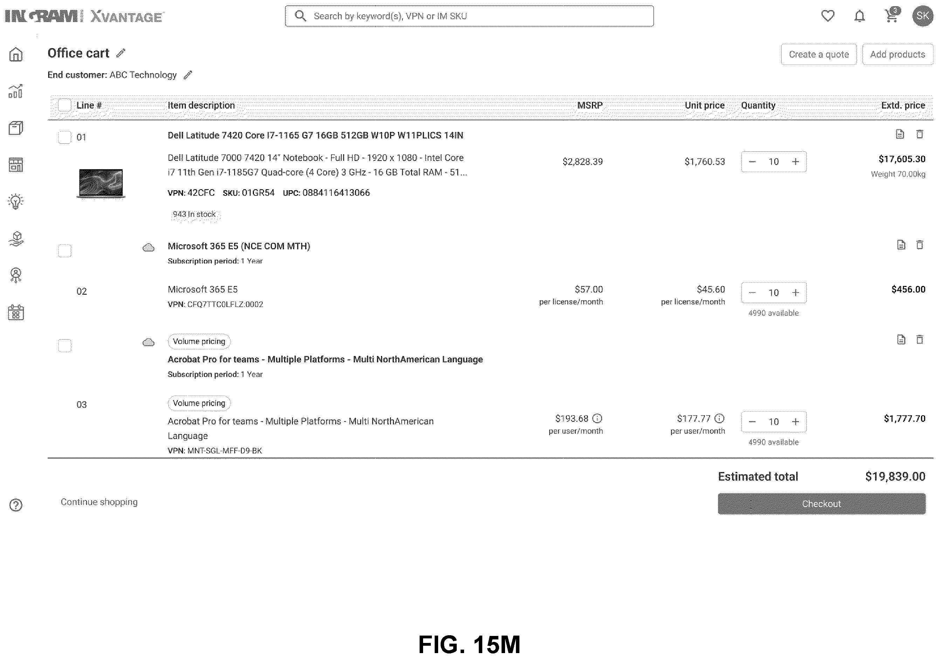

FIG. 15M depicts a Customer Subscription Cart that permits a customer to add, modify, or remove subscription plans. It can display a list of selected subscriptions, pricing, and renewal dates. Customers can manage their subscriptions and make changes according to their preferences and requirements.

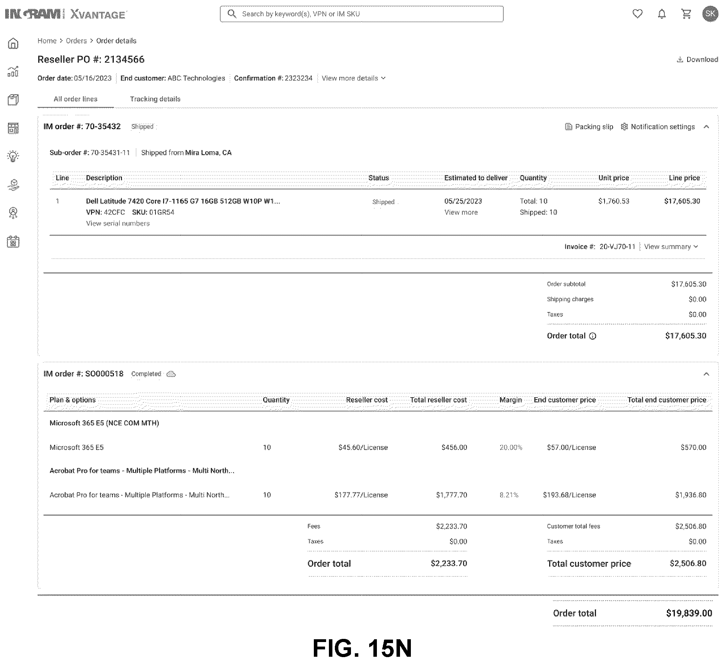

FIG. 15N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

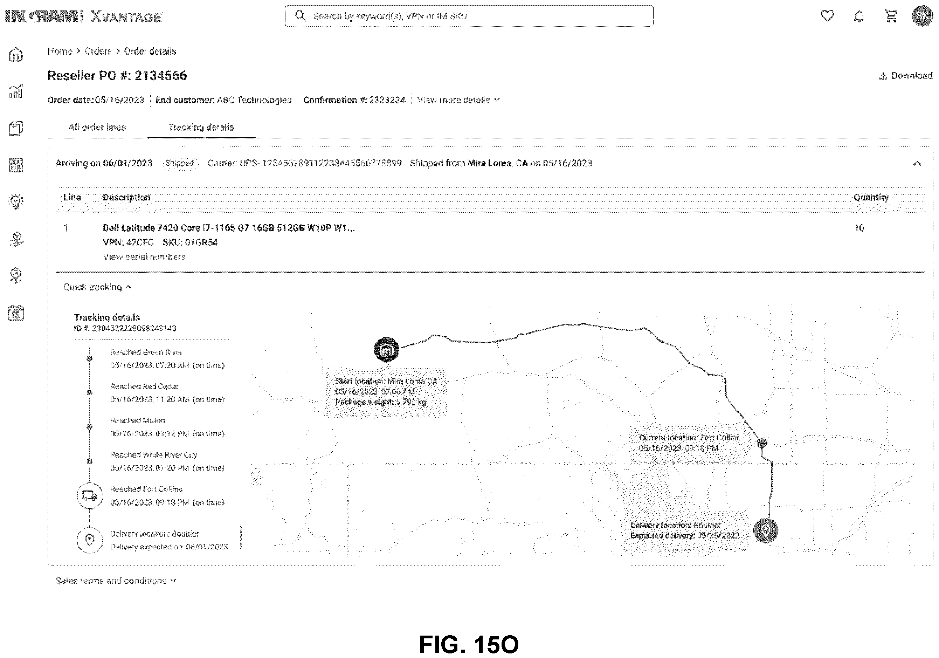

FIG. 15O depicts a Customer Shipment Tracking that provides customers with real-time tracking information about their shipments. It may include details such as the carrier, tracking number, current location, and estimated delivery date. Customers can stay informed about the whereabouts of their shipments.

FIG. 15P depicts a Customer Subscription History, that presents a historical record of the customer's subscription activities. It displays a list of previous subscriptions, including the subscription plan, duration, and status. Customers can review their subscription history, track past payments, and refer to previous subscription details.

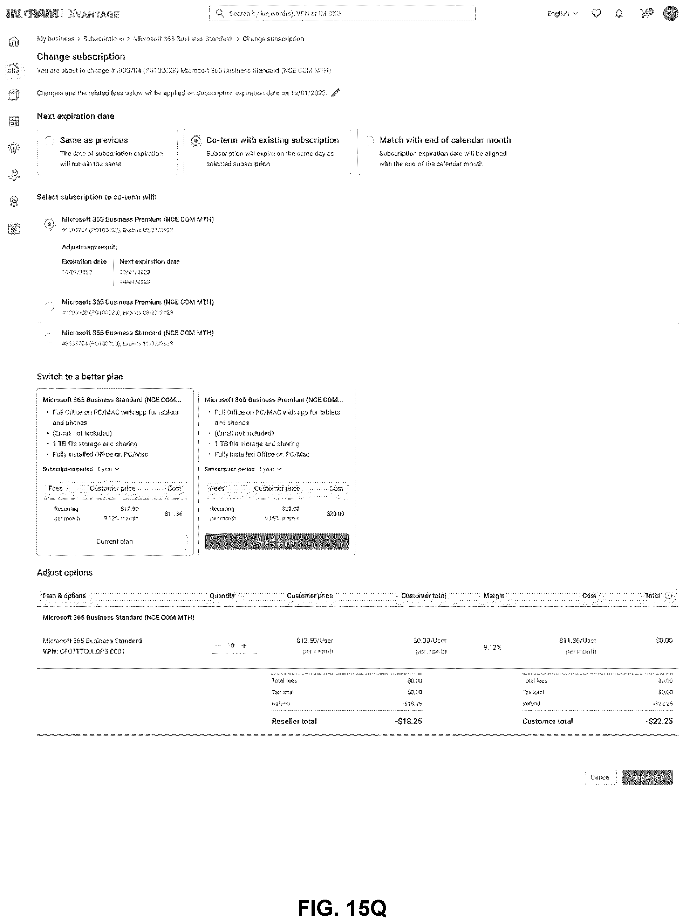

FIG. 15Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 15A to 15Q collectively represent the diverse functionalities and features offered by the SPoG UI, providing stakeholders with a comprehensive and user-friendly interface for vendor onboarding, partnership management, customer interaction, order management, subscription management, and tracking within the supply chain ecosystem.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, computer - implemented method may include integrating multiple communication channels (i.e., touchpoints) between the population of users into a unified interactive interface in a computer system, said unified interactive interface herein referred to as a SPoG UI, where the SPoG is a central interface component configured to consolidate user interactions, data, and/or functionalities of the population of users and where the SPoG UI is arranged to facilitate operations across a supply chain ecosystem. Computer - implemented method may also include managing end-to-end lifecycle of the user interactions utilizing the SPoG UI. Method may furthermore include collecting data from said user interactions within the SPoG UI. Method may in addition include analyzing said collected data to generate one or more insights for business growth. Method may moreover include performing one or more artificial intelligence and/or machine learning algorithms to enhance business operations based on the analyzed data. Method may also include incorporating regular updates and improvements into the SPoG UI based on the analyzed data. Method may furthermore include where the population of users may include users selected from two or more diverse groups, the groups having of distributors, resellers, customers, end-customers, vendors, and suppliers. Other embodiments of this aspect include corresponding computer systems, apparatus, and computer programs recorded on one or more computer storage devices, each configured to perform the actions of the methods.

Implementations may include one or more of the following features. Method where the integrating includes establishing communication links with multiple pre-existing business platforms. Method where the consolidated interaction points may include one or more websites, customer relationship management systems, vendor platforms, and supply chain management systems. Method where the managing of end-to-end fifecycle may include one or more of an initial contact, a service fulfillment, and a follow-up interaction. Method where the collecting data may include monitoring and/or logging of user activities within the SPoG UI. Method where the analyzing of collected data is performed using advanced statistical algorithms. Method where the artificial intelligence and machine learning algorithms include predictive analytics to identify market trends. Method where the artificial intelligence and machine learning algorithms include recommendation systems to personalize user interactions. The improvements can be based on analytics and/or the analyzed user feedback received through the SPoG UI. Implementations of the described techniques may include hardware, a method or process, or a computer tangible medium.

In one general aspect, system may include a communication integration module configured to integrate multiple communication channels (i.e., touchpoints). system may also include a consolidation module configured to combine the integrated communication channels into an unified interactive interface, said unified interactive interface herein referred to as a SPoG UI, where the SPoG is a central interface component configured to consolidate user interactions, data, and/or functionalities of the population of users and where the SPoG UI is arranged to facilitate operations across a supply chain ecosystem. system may furthermore include a lifecycle management module configured to manage end-to-end lifecycle of the user interactions within the SPoG. The system may additionally or alternatively include a data collection module configured to automatically collect data from the user interactions within the SPoG. system may moreover include a data analysis module configured to generate one or more insights based on the collected data. system may also include an artificial intelligence module configured to perform one or more AI and/or ML algorithms based on the analyzed data. system may furthermore include where the population of users may include users selected from two or more diverse groups, the groups having distributors, resellers, customers, end-customers, vendors, and suppliers. Other embodiments of this aspect include corresponding computer systems, apparatus, and computer programs recorded on one or more computer storage devices, each configured to perform the actions of the methods.

Systems and methods for automating SKU management can include a user interface configured to receive, from a user, catalog files in two or more diverse formats, a Catalog Transformation module configured to transform the catalog files into a standard format, predicting categorization and attribute mapping for at least one catalog item, wherein the Catalog Transformation module proposes categorization and attribute mapping utilizing iterative learning, a Real-Time Data Mesh (RTDM) module for ensuring real-time data exchange and synchronization across the system components, wherein the RTDM module facilitates real-time interactions between the user and the system, a Master Data Governance (MDG) module for validating the transformed catalogs and communicating any errors back to vendors, a Global Data Repository (GDR) for storing the validated catalogs and maintaining data integrity of the stored catalogs.

The systems and methods can include a Search Platform for indexing and retrieving the stored catalogs. Tthe user interface is a Single Pane of Glass User Interface (SPoG UI). A Dynamic SKU Creation module for generating SKUs in an ERP system for the catalog item, where the catalog item represents one or more non-transactional products, and wherein generating SKUs permits the one or more products to be added to a customer cart. The GDR integrates with the RTDM module to support real-time data synchronization across the system. The MDG module generates an indication to denote one or more errors occurring in a catalog transformation process associated with one or more transformed catalogs. A Global Pricing Engine (GPE) for determining real-time pricing for the catalog item. The GPE determines the price for a product based on one or more of: vendor price files, market trends, and historical pricing data. Implementations may include one or more of the following features. Method where the interactive elements include links to various business platforms. Method where the user interaction includes actions may include one or more clicks, hovers, and input data. Method where the collected data is analyzed using advanced statistical algorithms. Method where the personalized content is generated based on recommendation algorithms. Method may include updating the SPoG UI based on user feedback and data analysis results. Implementations of the described techniques may include hardware, a method or process, or a computer tangible medium

It is to be appreciated that the Detailed Description section, and not the Summary and Abstract sections, is intended to be used to interpret the claims. The Summary and Abstract sections may set forth one or more but not all exemplary embodiments of the present disclosure as contemplated by the inventor(s), and thus, are not intended to limit the present disclosure and the appended claims in any way.

The present disclosure has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the disclosure that others can, by applying knowledge within the skill of the art, readily modify and/or adapt for various applications such specific embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present disclosure should not be limited by any of the above-described exemplary embodiments, but should be defined only in accordance with the following claims and their equivalents.

## Claims

1. A system for automated near real-time special pricing calculation and application, the system comprising:
a special pricing algorithm module configured to receive first information comprising one or more of manufacturer details, product categories, solution types, historical buying patterns, and time of year, and to apply the received first information in the determination of special pricing;
a caching module for storing vendor-specific data for accurate pricing calculations;
an integration module configured to enable data exchange with external partners and with order processing systems for accurate pricing application;
a Pricing Validation and Maintenance module applying intelligent validation rules to ensure pricing accuracy;
a Special Pricing Creation and Application module automating the creation and application of special pricing to individual or multiple orders and quotes, based on the first information and the data,
wherein the integration module comprises data exchange technologies to facilitate data exchange with external systems.

2. The system of claim 1, further comprising a real time data mesh (RTDM) module providing real-time data management and analysis capabilities.

3. The system of claim 2, wherein the Special Pricing Algorithm module is configured to retrieve one or more insights from the RTDM module for accurate pricing determination.

4. The system of claim 1, wherein the caching mechanism includes a cache storing vendor-specific data.

5. The system of claim 1, wherein the integration module utilizes integration technology for data and document exchange.

6. The system of claim 1, further comprising a data validation mechanism within the Pricing Validation and Maintenance module, leveraging insights from the RTDM module.

7. The system of claim 1, wherein the data exchange technologies ensure accurate, secure, and industry-standard-compliant data exchange with external systems.

8. A computerized method for automated near real-time special pricing calculation and application, the method comprising: receiving inputs including manufacturer details, product categories, solution types, historical buying patterns, and time of year; applying special pricing algorithms based on the received inputs to determine correct pricing; validating the calculated pricing using predefined business rules; applying the determined pricing and associated conditions to individual or multiple orders and quotes; integrating with order processing systems to ensure accurate pricing application; performing data exchange with external systems using data exchange technologies.

9. The computerized method of claim 8, further comprising utilizing real-time data management and analysis capabilities provided by a RTDM module.

10. The computerized method of claim 8, wherein the inputs for special pricing determination are obtained from a caching mechanism storing vendor-specific data.

11. The computerized method of claim 8, wherein the validation of calculated pricing includes applying intelligent validation rules based on insights from the RTDM module.

12. The computerized method of claim 8, further comprising retrieving vendor-specific data from the caching mechanism for accurate pricing determination.

13. The computerized method of claim 8, wherein the data exchange with external systems is facilitated using data exchange technologies.

14. The computerized method of claim 8, wherein the data exchange technologies ensure accurate, secure, and industry-standard-compliant data exchange with external systems.

15. A computerized method for automated near real-time special pricing calculation and application, the method comprising: receiving inputs including manufacturer details, product categories, solution types, historical buying patterns, and time of year; applying special pricing algorithms based on the received inputs to determine correct pricing; validating the calculated pricing using predefined business rules; applying the determined pricing and associated conditions to individual or multiple orders and quotes; integrating with order processing systems to ensure accurate pricing application; performing data exchange with external systems using data exchange technologies.

16. The computerized method of claim 8, further comprising utilizing real-time data management and analysis capabilities provided by a RTDM module.

17. The computerized method of claim 8, wherein the inputs for special pricing determination are obtained from a caching mechanism storing vendor-specific data.

18. The computerized method of claim 8, wherein the validation of calculated pricing includes applying intelligent validation rules based on insights from the RTDM module.

19. The computerized method of claim 8, further comprising retrieving vendor-specific data from the caching mechanism for accurate pricing determination.

20. The computerized method of claim 8, wherein the data exchange with external systems is facilitated using data exchange technologies.
